(19) Europäisches Patentamt / European Patent Office / Office européen des brevets

(11) **EP 2 571 079 A1**

(12) **EUROPEAN PATENT APPLICATION**
published in accordance with Art. 153(4) EPC

(43) Date of publication:
**20.03.2013 Bulletin 2013/12**

(51) Int Cl.:
***H01M 2/16*** (2006.01)

(21) Application number: **11780356.9**

(22) Date of filing: **27.04.2011**

(86) International application number:
**PCT/JP2011/002473**

(87) International publication number:
**WO 2011/142096 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2010 JP 2010109582**

(71) Applicant: **Nippon Sheet Glass Company, Limited Tokyo 108-6321 (JP)**

(72) Inventors:
• **SUGIYAMA, Shoji**
  **Tokyo 108-6321 (JP)**
• **MORI, Keita**
  **Tokyo 108-6321 (JP)**

(74) Representative: **Körfer, Thomas**
  **Mitscherlich & Partner**
  **Patent- und Rechtsanwälte**
  **Sonnenstrasse 33**
  **80331 München (DE)**

(54) **SEPARATOR FOR A SEALED LEAD-ACID BATTERY, AND SEALED LEAD-ACID BATTERY**

(57) A separator for a valve regulated lead-acid battery comprises a paper sheet made by a wet papermaking process, mainly made of glass microfibers, wherein the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 $\mu$m as the glass microfibers and has an average pore diameter of 3.5 $\mu$m or less, and the thick-fiber layer is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50. In the valve regulated lead-acid battery, both the improvement of the compressive force lowering prevention and the improvement of the electrolyte stratification prevention can be achieved, improving the movement property of the electrolyte within the separator.

EP 2 571 079 A1

**Description**

Technical Field

The present invention relates to a separator for a valve regulated lead-acid battery, which comprises a glass microfiber sheet functioning as both a retainer and a separator in a valve regulated lead-acid battery {defined in JIS C 8707 (cathode absorption-type sealed stationary lead-acid battery) or JIS C 8704-2 (valve regulated stationary lead-acid battery)} having a group formed by laminating a separator with electrode plates. In addition, the invention is also concerned with a valve regulated lead-acid battery using the separator.

Background Art

Conventionally, with respect to such a separator for a valve regulated lead-acid battery, for obtaining a separator capable of functioning both as a retainer and a separator, there has been mainly used a single-layer single-constituent nonwoven fabric sheet (a paper sheet made by a wet papermaking process) having no laminated or composite structure and having an average pore diameter of about 3.7 $\mu$m wherein the sheet is mainly made of glass microfibers, particularly, glass fibers having an average fiber diameter of about 1 $\mu$m.

Summary of the Invention

Problems that the Invention is to Solve

A valve regulated lead-acid battery is mainly used as a back-up power source for computer devices and communication devices, a power source for electric vehicles, an emergency electric supply for buildings and hospitals, and the like. In automobile applications, a flooded lead-acid battery has been mainly used, but, recently, in automobiles, an idling stop and start system is employed, and there are increasing automobiles which mount thereon a valve regulated lead-acid battery having more excellent cycle life characteristics than the flooded lead-acid battery and being capable of being handled with ease and safety, and having no limitation of the installation location. Therefore, the valve regulated lead-acid battery used in such applications is required to be increased in the life and improved in the high rate discharge characteristics for enhancing the engine starting property.

With respect to the deterioration of the life of a recent valve regulated lead-acid battery, there have been pointed out two main causes, i.e., the lowering of the compressive force in a group after being impregnated with an electrolyte (which is caused mainly due to the lowering of the thickness of the separator, and which hereinafter is referred to as "compressive force lowering") and the stratification of the electrolyte (which is a phenomenon such that the repeated cycles of charging and discharging cause a difference in the specific gravity of the electrolyte between the upper and lower portions of the battery, and which hereinafter is referred to as "electrolyte stratification" or "stratification"). Therefore, in the recent valve regulated lead-acid battery, for obtaining an ideal battery having a further improved life of the battery, it is necessary to remove both the above-mentioned two causes of the deterioration of life (compressive force lowering and electrolyte stratification). Further, for improving the high rate discharge characteristics, it is necessary to promote the movement of the electrolyte in the battery.

In the above-mentioned single-layer single-constituent separator having no laminated or composite structure, which has been conventionally mainly used, techniques for respectively removing the above-mentioned two causes of the deterioration of life (compressive force lowering and electrolyte stratification) have been proposed; however, a technique for simultaneously removing both the two causes of the deterioration of life (compressive force lowering and electrolyte stratification) has not yet been proposed. The reason for this is presumed that the improvements of the separator required for removing the two causes of the deterioration of life (compressive force lowering and electrolyte stratification) conflict with each other, and thus it is difficult to achieve both the conflicting improvements in the single-layer single-constituent separator having no laminated or composite structure.

Further, in the single-layer single-constituent separator having no laminated or composite structure, which has been conventionally mainly used, with respect to an idea of the movement of the electrolyte in the battery for improving the high rate discharge characteristics, a technique for improving the movement of the electrolyte at the interface between the electrode plate and the separator has been proposed, but a technique for improving the movement of the electrolyte within the separator has not been proposed. The reason for this is presumed that the single-layer single-constituent separator having no laminated or composite structure has a uniform porous structure in the separator and hence it is difficult to control the movement of the electrolyte within the separator.

In view of the above-mentioned problems accompanying the conventional techniques, an object of the present invention is to provide a separator for a valve regulated lead-acid battery comprising a glass microfiber sheet functioning as both a retainer and a separator, wherein the separator is advantageous not only in that both the improvements required for removing the two causes of the deterioration of life of a valve regulated lead-acid battery (compressive force lowering and electrolyte stratification), which conventionally have not been able to be achieved at the same time, i.e., both the improvement of a compressive force lowering prevention effect and the improvement of an electrolyte stratification prevention effect can be achieved, but also in that the movement of the electrolyte within the separator can be promoted to improve the high rate discharge characteristics, and further to provide a valve regulated lead-acid battery using the separator.

Means for Solving the Problems

The present inventors have conducted extensive and intensive studies with a view toward achieving the above object. As a result, they have obtained the following findings. The electrolyte stratification is a phenomenon caused when sulfuric acid having a high specific gravity discharged from the electrode plate moves downwardly mainly through the separator, and therefore they have paid attention to the fact that an electrolyte stratification prevention effect can be obtained by improving the separator so that it retains the sulfuric acid discharged from the electrode plate so as not to permit the sulfuric acid to move downwardly through the separator layer in contact with the electrode plate. Particularly, as a technical point of obtaining the electrolyte stratification prevention effect, they have paid attention to the point that, among the all layers of the separator, especially, the separator surface layer portion in contact with the electrode plate surface is improved in the electrolyte retaining ability (electrolyte downward movement prevention ability) in what way.

On the other hand, for obtaining a compressive force lowering prevention effect, the use of glass fibers having an increased diameter for increasing the pore diameter of the fiber layer to enhance the compressibility is effective. For achieving this, the increase of the average fiber diameter of the glass fibers in the all layers of the separator is effective. Therefore, as an idea of obtaining a separator which can achieve both the compressive force lowering prevention effect and the electrolyte stratification prevention effect, an idea has been found such that, in the single-layer single-constituent separator having an average fiber diameter of glass fiber of about 1 $\mu$m and an average pore diameter of about 3.7 $\mu$m, which has conventionally been mainly used, by setting the average fiber diameter of the glass fibers in the all layers at more than 1 $\mu$m, a compressive force lowering prevention effect is surely obtained, and further, for obtaining an electrolyte stratification prevention effect, a difference of the average fiber diameter of the glass fibers (a difference of the average pore diameter) is made in the thicknesswise direction of the separator, and, by setting the average fiber diameter of only the glass fibers in the separator surface layer portion in contact with the electrode plate surface at less than 1 $\mu$m (by setting the average pore diameter at less than 3.7 $\mu$m), the electrolyte retaining ability (electrolyte downward movement prevention ability) is locally improved.

Further, for improving the high rate discharge characteristics which are short-time high current discharge performance, it is important that the electrolyte retained in the separator is quickly fed to the electrode plate side, and, conventionally, ideas of promoting the movement of the electrolyte at the interface between the electrode plate and the separator (a method for improving the adhesion between the electrode plate and the separator, a method for increasing the amount of the electrolyte retained in the surface portion of the separator, and the like) have been proposed, but the present inventors have found that the movement of the electrolyte within the separator, which has conventionally never been thought, can be controlled by making a difference of the average pore diameter of the fiber layer in the thicknesswise direction of the separator. That is, they have found that when the fiber layers having different average pore diameters are formed in a laminated structure in the thicknesswise direction of the separator, the electrolyte absorptivities of the individual layers are changed in the thicknesswise direction of the separator to promote the movement of the electrolyte in the thicknesswise direction of the separator, so that the amount of the fed electrolyte can be increased.

The present invention has been made based on the above finding, and, for achieving the above object, the separator for the valve regulated lead-acid battery of the first embodiment of the invention is a separator for a valve regulated lead-acid battery, which comprises a paper sheet made by a wet papermaking process, mainly made of glass microfibers, and which is characterized in that the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 $\mu$m as the glass microfibers and has an average pore diameter of 3.5 $\mu$m or less, and the thick-fiber layer is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50.

In the invention, the average fiber diameter of the glass fibers in the all layers of the separator is 1.2 $\mu$m or more, and therefore the compressive force lowering prevention effect is improved. The thin-fiber layers having an average fiber diameter of glass fibers of 0.9 $\mu$m or less (having an average pore diameter of 3.5 $\mu$m or less) are formed as the surface layer portions on the both surfaces of the separator in contact with the electrode plate surfaces, and therefore the electrolyte retaining ability (electrolyte downward movement prevention ability) is locally enhanced to improve the electrolyte stratification prevention effect. A difference of the average fiber diameter of the glass fibers (a difference of the average pore diameter) is made in the thicknesswise direction of the separator over the all layers of the separator, and therefore, while achieving the average fiber diameter of the glass fibers in the all layers as large as 1.2 $\mu$m or more, the electrolyte retaining ability (electrolyte downward movement prevention ability) of the separator surface layer portion in contact with the electrode plate surface is improved. The thick-fiber layer having an average fiber diameter of glass fibers of 1.3 $\mu$m or more is formed as the separator intermediate layer portion which is not in contact with the electrode plate surface, and therefore, while improving the electrolyte retaining ability (electrolyte downward movement prevention ability) of the separator surface layer portion in contact with the electrode plate surface, the average fiber diameter of the glass fibers in the all layers as large as 1.2 $\mu$m or more is achieved to improve the compressive force lowering prevention effect. A difference of the average pore diameter is made in the thicknesswise direction of the separator over the all layers of the separator, and therefore the electrolyte movement property from the thick-fiber layer (large pore diameter), which is the separator intermediate layer, toward the thin-fiber layer (small pore diameter), which is the separator surface layer, is enhanced to improve the electrolyte feeding ability during the high rate discharge. Further, the thickness ratio of the thin-fiber layers to the thick-fiber layer in the all layers of the separator is 10/90 to 50/50, and therefore the amount of the electrolyte retained in the layer having the locally improved electrolyte retaining ability provided in the separator surface layer portion in contact with the electrode plate surface is ensured, and thus the electrolyte retaining ability of the above layer and the amount of the electrolyte retained in the layer are ensured to surely achieve both the improvement of the electrolyte stratification prevention effect and the improvement of the electrolyte feeding ability during the high rate discharge.

The separator for the valve regulated lead-acid battery of the second embodiment is the separator for the valve regulated lead-acid battery of the first embodiment, wherein the thicknesses of the two thin-fiber layers are substantially the same.

The separator for the valve regulated lead-acid battery of the third embodiment is the separator for the valve regulated lead-acid battery of the first embodiment, wherein the average pore diameters of the two thin-fiber layers are substantially the same.

The separator for the valve regulated lead-acid battery of the fourth embodiment is the separator for the valve regulated lead-acid battery of the first embodiment, wherein the separator is made substantially only of the glass microfibers, wherein the glass microfibers constituting the thin-fiber layers have an average fiber diameter of 0.4 to 0.9 $\mu$m.

The separator for the valve regulated lead-acid battery of the fifth embodiment is the separator for the valve regulated lead-acid battery of the first embodiment, wherein the thickness ratio of the thin-fiber layers to the thick-fiber layer in the all layers is 10/90 or more and less than 25/75.

The separator for the valve regulated lead-acid battery of the sixth embodiment is the separator for the valve regulated lead-acid battery of the first embodiment, wherein the thin-fiber layer comprises 50% by mass or more of the glass microfibers, 0 to 30% by mass of organic fibers having acid resistance and thermal adhesiveness, and 0 to 30% by mass of an inorganic fine powder.

The separator for the valve regulated lead-acid battery of the seventh embodiment is the separator for the valve regulated lead-acid battery of the first embodiment, wherein the thick-fiber layer comprises 70% by mass or more of the glass microfibers and 0 to 30% by mass of organic fibers having acid resistance and thermal adhesiveness.

The separator for the valve regulated lead-acid battery of the eighth embodiment is the separator for the valve regulated lead-acid battery of the first embodiment, wherein the thin-fiber layers and the thick-fiber layer are formed into a three-layer laminated structure in a wet state in a wet papermaking process for obtaining the paper sheet.

Further, for achieving the above object, the valve regulated lead-acid battery of the ninth embodiment of the invention is characterized by using the separator of the first embodiment.

Further, for achieving the above object, the valve regulated lead-acid battery of the tenth embodiment of the invention is a valve regulated lead-acid battery with a separator arranged between electrode plates, the separator comprising a paper sheet made by a wet papermaking process, mainly made of glass microfibers, wherein the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 $\mu$m as the glass microfibers and has an average pore diameter of 3.5 $\mu$m or less, and the thick-fiber layer is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50, wherein a layer of the separator in contact with the electrode plate surface is only the thin-fiber layer.

The valve regulated lead-acid battery of the eleventh embodiment is the valve regulated lead-acid battery of the tenth embodiment, wherein the thickness ratio of the thin-fiber layers to the thick-fiber layer in the all layers of the separator is 10/90 or more and less than 25/75.

Advantage of the Invention

In the invention, with respect to the separator for the valve regulated lead-acid battery comprising a glass microfiber sheet functioning as both a retainer and a separator, both the improvements required for removing the two causes of the deterioration of life of a valve regulated lead-acid battery (compressive force lowering and electrolyte stratification), which conventionally have not been able to be achieved at the same time, i.e., both the improvement of the compressive force lowering prevention effect and the improvement of the electrolyte stratification prevention effect can be efficiently achieved, making it possible to obtain a valve regulated lead-acid battery having further improved life. In addition, the movement property of the electrolyte in the thicknesswise direction of the separator is promoted to improve the electrolyte feeding ability during the high rate discharge, making it possible to further improve the valve regulated lead-acid battery in the charge-discharge characteristics.

Mode for Carrying Out the Invention

The separator for the valve regulated lead-acid battery of the invention is a separator comprising a paper sheet made by a wet papermaking process, mainly made of glass microfibers, and has requirements that the separator be a sheet-form structure having a three-layer laminated structure (A-B-A laminated structure) which comprises two thin-fiber layers (A layers) and one thick-fiber layer (B layer), wherein the two thin-fiber layers (A layers) cover both surfaces of the thick-fiber layer (B layer) in the thicknesswise direction of the separator to constitute the three-layer laminated structure, wherein each of the thin-fiber layers (A layers) is made of glass fibers having an average fiber diameter of 0.4 to 1.0 $\mu$m as the glass microfibers and has an average pore diameter of 3.5 $\mu$m or less, and the thick-fiber layer (B layer) is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50.

The average fiber diameter of the glass fibers in the all layers of the separator is 1.2 $\mu$m or more, and therefore the compressibility of the all layers of the separator is increased, so that the compressive force lowering prevention effect can be improved. The thin-fiber layers having an average fiber diameter of glass fibers of 1.0 $\mu$m or less and an average pore diameter of 3.5 $\mu$m or less or having an average fiber diameter of glass fibers of 0.9 $\mu$m or less are formed as the surface layer portions on the both surfaces of the separator in contact with the electrode plate surfaces, and therefore the electrolyte retaining ability (electrolyte downward movement prevention ability) of the surface layer portions on the both surfaces of the separator in contact with the electrode plate surfaces is enhanced, so that the electrolyte stratification prevention effect can be improved. A difference of the average fiber diameter of the glass fibers (a difference of the average pore diameter) is made in the thicknesswise direction of the separator over the all layers of the separator, and therefore, while improving the compressibility of the all layers of the separator, the electrolyte retaining ability (electrolyte downward movement prevention ability) of the separator surface layer portion can be improved. The thick-fiber layer having an average fiber diameter of glass fibers of 1.3 $\mu$m or more and an average pore diameter of 4.0 $\mu$m or more is formed as the separator intermediate layer portion which is not in contact with the electrode plate surface, and therefore, while improving the electrolyte retaining ability (electrolyte downward movement prevention ability) of the separator surface layer portion, the average fiber diameter of the glass fibers in the all layers of the separator as large as 1.2 $\mu$m or more is achieved, so that the compressive force lowering prevention effect can be improved. A difference of the average pore diameter is made in the thicknesswise direction of the separator over the all layers of the separator, that is, the thick-fiber layer has an average pore diameter which is 1.5 times or more that of the thin-fiber layer, and therefore the electrolyte movement property from the thick-fiber layer (large pore diameter), which is the separator intermediate layer, toward the thin-fiber layer (small pore diameter), which is the separator surface layer in contact with the electrode plate surface, is enhanced, so that the electrolyte feeding ability during the high rate discharge can be improved. Further, the thickness ratio of the thin-fiber layers to the thick-fiber layer in the all layers of the separator is 10/90 or more (the total thickness of the thin-fiber layers in the all layers of the separator is 10% or more of the total thickness of the all layers), and therefore the amount of the electrolyte retained in the layer having the locally improved electrolyte retaining ability provided in the surface layer portions on the both surfaces of the separator in contact with the electrode plate surfaces is ensured, and thus the electrolyte retaining ability of the above layer and the amount of the electrolyte retained in the layer are ensured, so that the improvement of the electrolyte stratification prevention effect can be surely achieved.

When the thickness ratio of the thin-fiber layers to the thick-fiber layer in the all layers of the separator is more than 50/50, it is difficult to improve the compressive force lowering prevention effect, and further the ratio of the glass fiber material of 0.9 $\mu$m or less to the all layers of the separator is increased, so that the unit cost of the glass fiber material in the all layers of the separator disadvantageously becomes high. Therefore, the thickness ratio of the thin-fiber layers to the thick-fiber layer in the all layers of the separator is more preferably 40/60 or less, further preferably less than 25/75.

When the glass fibers constituting the thin-fiber layers have an average fiber diameter of less than 0.4 $\mu$m, it is difficult to achieve both the improvement of the compressive force lowering prevention effect and the improvement of the electrolyte stratification prevention effect, and further the thin-fiber layers are increased in density and hence reduced in porosity to increase the electric resistance, and the unit cost of the glass fiber material in the all layers of the separator disadvantageously becomes high. Therefore, the glass fibers constituting the thin-fiber layers more preferably have an average fiber diameter of 0.5 $\mu$m or more, further preferably 0.6 $\mu$m or more. For the same reason, the average pore diameter of the thin-fiber layer is more preferably 0.5 $\mu$m or more, further preferably 1.0 $\mu$m or more.

When the glass fibers constituting the thick-fiber layer have an average fiber diameter of more than 4.0 $\mu$m, it is difficult to achieve both the improvement of the compressive force lowering prevention effect and the improvement of the electrolyte stratification prevention effect, and further the water content of the thick-fiber layer (electrolyte retaining ability) is reduced and there is a disadvantage in that it is difficult to obtain a strength of the thick-fiber layer. Therefore, the glass fibers constituting the thick-fiber layer more preferably have an average fiber diameter of 3.5 $\mu$m or less, further preferably 3.0 $\mu$m or less. For the same reason, the average pore diameter of the thick-fiber layer is more preferably 17 $\mu$m or less, further preferably 15 $\mu$m or less, still further preferably 13 $\mu$m or less.

With respect to the two thin-fiber layers disposed on the both surfaces of the thick-fiber layer, the total thickness of the two thin-fiber layers may be 10% or more of the total thickness of the all layers. When the two thin-fiber layers are in contact with both the positive plate surface and the negative plate surface and one of them is a layer in contact with the positive plate surface (positive plate contact layer) and another one is a layer in contact with the negative plate surface (negative plate contact layer), generally, unless there is a special reason, for example, the thickness ratio of the positive plate contact layer to the negative plate contact layer is required to be appropriately set different for the reason of battery design, it is preferred that the thicknesses of the two thin-fiber layers are substantially the same for making it easy to achieve the improvement of the electrolyte stratification prevention effect by virtue of forming the thin-fiber layers, for making it easy to achieve both the improvement of the compressive force lowering prevention effect and the improvement of the electrolyte stratification prevention effect, and for making the electrolyte movement property and electrolyte movement amount from the thick-fiber layer, which is the separator intermediate layer, toward the thin-fiber layer, which is the separator surface layer, uniform in the both surfaces of the separator (the positive plate contact layer and the negative plate contact layer). For the same reason, it is preferred that the average pore diameters of the two thin-fiber layers are substantially the same.

The two thin-fiber layers disposed on the both surfaces of the thick-fiber layer may have thicknesses different from each other according to the actual design of the battery. In this case, it is preferred that the thickness of one of the two thin-fiber layers is 105 to 300% of the thickness of another one. Further, when the two thin-fiber layers are in contact with both the positive plate surface and the negative plate surface and one of them is a layer in contact with the positive plate surface (positive plate contact layer) and another one is a layer in contact with the negative plate surface (negative plate contact layer), it is preferred that the thin-fiber layer having a larger thickness is formed so as to face the negative plate side (and to be the negative plate contact layer). In a charge-discharge reaction of a lead-acid battery, the positive plate surface emits sulfuric acid simultaneously with absorption of water during the charging and emits water simultaneously with absorption of sulfuric acid during the discharging, and the negative plate surface emits sulfuric acid during the charging and absorbs sulfuric acid during the discharging. Thus, particularly in the valve regulated lead-acid battery, the electrode plate surface actively gives the electrolyte to and receives it from the adjacent separator layer having the electrolyte retaining ability, and the separator layer is designed to have the compensating ability to give and receive the electrolyte (retention volume and retention rate as well as feed volume and feed rate) for the above active action. By the way, the two thin-fiber layers are required to retain in the layers the sulfuric acid emitted from the electrode plate to improve the electrolyte stratification prevention effect. However, as mentioned above, the positive plate surface absorbs and emits the electrolyte simultaneously during both the charging and the discharging, whereas the negative plate surface only emits the electrolyte during the charging and only absorbs the electrolyte during the discharging, and, with respect to the apparent amount of the electrolyte moving between the electrode plate surface and the adjacent separator, the electrolyte moving amount on the negative plate surface is higher than the electrolyte moving amount on the positive plate surface, and hence the separator surface layer in contact with the negative plate surface is needed to have more excellent electrolyte giving and receiving ability (retention volume and retention rate as well as feed volume and feed rate, especially the retention volume and feed volume, namely, tank function) than the separator surface layer in contact with the positive plate surface. Therefore, when, as mentioned above, the thickness of one of the two thin-fiber layers is 105 to 300% of the thickness of another one and the thin-fiber layer having a larger thickness is formed so as to face the negative plate side and the thin-fiber layer having a smaller thickness is formed so as to face the positive plate side, the thin-fiber layer having a smaller thickness and a lower tank function can be formed on the positive plate side at which the electrolyte moving amount is lower and the thin-fiber layer having a larger thickness and a higher tank function can be formed on the negative plate side at which the electrolyte moving amount is higher according to the difference between the positive side and the negative side with respect to the apparent electrolyte moving amount between the electrode plate surface and the adjacent separator, so that while exhibiting the electrolyte stratification prevention effect due to the two thin-fiber layers, the electrolyte giving and receiving ability to and from the negative plate surface can be improved to cause the battery reaction on the negative side to efficiently proceed, thus improving the battery performance of the whole battery. When the thickness of one of the two thin-fiber layers is more than 300% of the thickness of another one, the thickness of the thin-fiber layer having a smaller thickness is so small that there is a danger that the electrolyte stratification prevention effect due to the thin-fiber layers, which is the effect aimed at by the invention, cannot be achieved, and therefore such thicknesses of the thin-fiber layers are not preferred.

The two thin-fiber layers disposed on the both surfaces of the thick-fiber layer may have average pore diameters different from each other according to the actual design of the battery. In this case, it is preferred that the average pore diameter of one of the two thin-fiber layers is 105 to 200% of the average pore diameter of another one (with the proviso that the larger average pore diameter is 3.5 $\mu$m or less). Further, when the two thin-fiber layers are in contact with both the positive plate surface and the negative plate surface and one of them is a layer in contact with the positive plate surface (positive plate contact layer) and another one is a layer in contact with the negative plate surface (negative plate contact layer), it is preferred that the thin-fiber layer having a larger average pore diameter is formed so as to face the negative plate side (and to be the negative plate contact layer). As mentioned above, in the valve regulated lead-acid battery, when the thin-fiber layer having a smaller thickness and a lower tank function is formed on the positive plate side at which the electrolyte moving amount is lower and the thin-fiber layer having a larger thickness and a higher tank function is formed on the negative plate side at which the electrolyte moving amount is higher according to the difference between the positive side and the negative side with respect to the apparent electrolyte moving amount between the electrode plate surface and the adjacent separator, the electrolyte giving and receiving ability to and from the negative plate surface can be improved to cause the battery reaction on the negative side to efficiently proceed. In this case, attention is paid to the performance of the retention volume and feed volume (tank function) as the electrolyte giving and receiving ability to and from the negative plate surface, but, when attention is paid to the performance of the retention rate and feed rate, the larger the average pore diameter of the thin-fiber layer is, the higher the electrolyte retention rate or feed rate (electrolyte moving rate) is. Therefore, when, as mentioned above, the average pore diameter of one of the two thin-fiber layers is 105 to 200% of the average pore diameter of another one (with the proviso that the larger average pore diameter is 3.5 $\mu$m or less) and the thin-fiber layer having a larger average pore diameter is formed so as to face the negative plate side and the thin-fiber layer having a smaller average pore diameter is formed so as to face the positive plate side, the thin-fiber layer having a smaller average pore diameter and a lower electrolyte moving rate can be formed on the positive plate side at which the electrolyte moving amount is lower and the thin-fiber layer having a larger average pore diameter and a higher electrolyte moving rate can be formed on the negative plate side at which the electrolyte moving amount is higher according to the difference between the positive side and the negative side with respect to the apparent electrolyte moving amount between the electrode plate surface and the adjacent separator, so that while exhibiting the electrolyte stratification prevention effect due to the two thin-fiber layers, the electrolyte giving and receiving ability to and from the negative plate surface can be improved to cause the battery reaction on the negative side to efficiently proceed, thus improving the battery performance of the whole battery. When the average pore diameter of one of the two thin-fiber layers is more than 200% of the average pore diameter of another one, the average pore diameter of the thin-fiber layer having a larger average pore diameter is so large that there is a danger that the electrolyte stratification prevention effect due to the thin-fiber layers, which is the effect aimed at by the invention, cannot be achieved, and therefore such average pore diameters of the thin-fiber layers are not preferred.

The separator of the invention is a separator comprising a paper sheet made by a wet papermaking process, mainly made of glass microfibers, and, according to the required specifications or properties, various side materials, such as organic fibers for improving the paper sheet made by the wet papermaking process in mechanical strength, or various additives, such as an inorganic fine powder for suppressing the growth of dendrite (dendritic lead) (a substance causing short-circuiting of battery) which is caused due to the charging and discharging of a battery, can be used and mixed into the separator in such a small amount that the desired effects of the invention are not sacrificed, but, for making it easy to achieve both the improvement of the compressive force lowering prevention effect and the improvement of the electrolyte stratification prevention effect, it is preferred that the separator is made substantially only of the glass fibers.

With respect to the organic fibers, organic fibers comprising polyolefin, polyester, polyacrylonitrile, polyaramid, or the like and having acid resistance and thermal adhesiveness can be used. When thermally adhesive organic fibers or fibrillating organic fibers are used and mixed into the separator, a binder effect is exhibited, making it possible to improve the strength of the fiber layer or separator.

With respect to the inorganic fine powder, an inorganic fine powder comprising silica, diatomaceous earth, glass, smectite, or the like can be used. When such an inorganic fine powder is used and mixed into the separator, the fiber layer or separator is reduced in the pore diameter and the porous structure is rendered complicated, making it possible to impart to the separator an effect of suppressing the growth of dendrite which is a substance causing short-circuiting of battery. Therefore, the inorganic fine powder preferably has a specific surface area of 50 m$^2$/g or more, further preferably 100 m$^2$/g or more.

As mentioned above, a side material or an additive, such as organic fibers or an inorganic fine powder, is used in the separator of the invention in such a minimum amount that the desired effects of the invention are not sacrificed according to the required specifications or properties. In accordance with this concept, in an embodiment using organic fibers or an inorganic fine powder for the above-mentioned purpose, the construction of the thin-fiber layer preferably comprises 50% by mass or more of the glass microfibers, 0 to 30% by mass of organic fibers having acid resistance and thermal adhesiveness, and 0 to 30% by mass of an inorganic fine powder, and the construction of the thick-fiber layer preferably comprises 70% by mass or more of the glass microfibers and 0 to 30% by mass of organic fibers having acid resistance and thermal adhesiveness. When an inorganic fine powder is contained in the thin-fiber layer of the separator in contact with the electrode plate surface, the inorganic fine powder can efficiently suppress the growth of dendrite deposited from the negative plate surface.

The glass fibers in the invention are glass fibers (glass short fibers) in a wool form produced by forming, for example, acid-resistant C glass into fibers by a flame method (a method in which fused glass is allowed to fall in a thread form from a nozzle at the bottom of a fusion furnace and blown with a high-speed flame) or a centrifugal method (a method in which fused glass is supplied to a cylindrical container having a number of orifices formed in a high-speed rotating round wall called a spinner and spun using centrifugal force and blown with a high-speed air stream), and it is preferred that the content of a particulate material having a particle diameter of 30 $\mu$m or more and a fibrous material having a diameter of 10 $\mu$m or more in the glass fibers is 0.1% by mass or less. With respect to the above-mentioned glass short fibers, into the original glass short fibers may be mixed a slight amount of a particulate material or fibrous material having a relatively large size as compared to the original glass short fibers (generally called shot), such as a fiber having a teardrop-shaped bulk material at its end, a fiber having a partially increased diameter, or a thick fiber remaining as it is before blown with a flame or a high-speed air stream.

The separator of the invention may have a three-layer laminated structure of the above-mentioned characteristic feature comprising the thin-fiber layers of the above-mentioned characteristic feature and the thick-fiber layer of the above-mentioned characteristic feature, and the laminated structure may be either unified or not unified. For example, the separator comprising the paper sheet made by the wet papermaking process in the invention having a three-layer structure of the thin-fiber layers and the thick-fiber layer is preferably obtained by laminating and unifying paper sheets made by a wet papermaking process, serving as thin-fiber layers, and a paper sheet made by a wet papermaking process, serving as a thick-fiber layer, by forming thin-fiber layers and a thick-fiber layer in a wet papermaking process for obtaining the paper sheet and (or simultaneously with) laminating and unifying the layers in the wet state (a "stacking paper-making method" in which wet paper sheets are stacked on one another, a "layering paper-making method" in which a wet paper sheet is put on another while making the paper sheet to form layers, or the like), or by a combination of the above methods. However, from the viewpoint of obtaining excellent adhesion between the laminated and unified layers, more preferred is the separator comprising the paper sheet made by the wet papermaking process, obtained by the latter, namely, by forming thin-fiber layers and a thick-fiber layer in a wet papermaking process for obtaining the paper sheet and (or simultaneously with) laminating and unifying the layers in the wet state. With respect to the total thickness of the all layers of the separator of the invention, there is no particular limitation, but the total thickness can be, for example, about 1 to 3 mm.

The valve regulated lead-acid battery of the invention may have such a construction as to arrange, between electrode plates, the separator comprising the paper sheet made by the wet papermaking process and having a three-layer laminated structure of the above-mentioned characteristic feature comprising the thin-fiber layers of the above-mentioned characteristic feature and the thick-fiber layer of the above-mentioned characteristic feature, and, for example, when assembling a battery, a separator having the thin-fiber layers and the thick-fiber layer laminated and unified together may be incorporated, or paper sheets made by a wet papermaking process, serving as the thin-fiber layers, and a paper sheet made by a wet papermaking process, serving as the thick-fiber layer, may be stacked on one another and incorporated.

Further, in the valve regulated lead-acid battery of the invention, even when the pasting paper provided on the electrode plate surface has a construction like the thin-fiber layer of the above-mentioned characteristic feature and the separator has a construction like the thick-fiber layer of the above-mentioned characteristic feature, effects similar to the above-mentioned effects of the invention can be obtained by achieving substantially the same construction as the battery with the separator arranged between electrode plates, the separator comprising the paper sheet made by the wet papermaking process and having a three-layer laminated structure of the above-mentioned characteristic feature.

Examples

Hereinbelow, the present invention will be described in detail with reference to the following Examples and Comparative Examples.

(Comparative Example 1)

Sheets (thin-fiber sheets) in a wet state obtained by subjecting, to wet papermaking, C glass short fibers having an average fiber diameter of 0.5 $\mu$m in an amount of 100% by mass, and a sheet (thick-fiber sheet) in a wet state obtained by subjecting, to wet papermaking, C glass short fibers having an average fiber diameter of 1.2 $\mu$m in an amount of 100% by mass, were laminated in the order of thin-fiber sheet-thick-fiber sheet-thin-fiber sheet and unified in the wet state, followed by drying, to obtain a separator having a three-layer laminated structure (thickness: 2.0 mm).

(Examples 1 to 50 and Comparative Examples 2 to 4)

Separators having a three-layer laminated structure (thickness: 2.0 mm) were individually obtained in the same manner as in Comparative Example 1 under the respective conditions shown in Tables 1 to 4.

(Example 51)

Sheets (thin-fiber sheets) in a wet state obtained by subjecting, to wet papermaking, C glass short fibers having an average fiber diameter of 0.8 $\mu$m in an amount of 85% by mass and polyethylene terephthalate/copolymer polyester core-sheath-type composite fibers {[core component:sheath component] weight ratio: 50:50}, serving as organic fibers having acid resistance and thermal adhesiveness, in an amount of 15% by mass, which had an average fineness of 1.3 dtex and an average fiber length of 5 mm, and which had polyethylene terephthalate (melting point: about 245?) as a core component and copolymer polyester (melting point: about 110?) as a sheath component, and a sheet (thick-fiber sheet) in a wet state obtained by subjecting, to wet papermaking, C glass short fibers having an average fiber diameter of 1.5 $\mu$m in an amount of 100% by mass, were laminated in the order of thin-fiber sheet-thick-fiber sheet-thin-fiber sheet and unified in the wet state, followed by drying, to obtain a separator having a three-layer laminated structure (thickness: 2.0 mm).

(Example 52)

Sheets (thin-fiber sheets) in a wet state obtained by subjecting, to wet papermaking, C glass short fibers having an average fiber diameter of 0.9 $\mu$m in an amount of 75% by mass and the polyethylene terephthalate/copolymer polyester core-sheath-type composite fibers used in Example 51 in an amount of 25% by mass, and a sheet (thick-fiber sheet) in a wet state obtained by subjecting, to wet papermaking, C glass short fibers having an average fiber diameter of 1.8 $\mu$m in an amount of 85% by mass and the polyethylene terephthalate/copolymer polyester core-sheath-type composite fibers used in Example 51 in an amount of 15% by mass, were laminated in the order of thin-fiber sheet-thick-fiber sheet-thin-fiber sheet and unified in the wet state, followed by drying, to obtain a separator having a three-layer laminated structure (thickness: 2.0 mm).

(Example 53)

Sheets (thin-fiber sheets) in a wet state obtained by subjecting, to wet papermaking, C glass short fibers having an average fiber diameter of 1.0 $\mu$m in an amount of 65% by mass, the polyethylene terephthalate/copolymer polyester core-sheath-type composite fibers used in Example 51 in an amount of 15% by mass, and a silica fine powder having a specific surface area of 200 m$^2$/g in an amount of 20% by mass, and a sheet (thick-fiber sheet) in a wet state obtained by subjecting, to wet papermaking, C glass short fibers having an average fiber diameter of 1.8 $\mu$m in an amount of 85% by mass and the polyethylene terephthalate/copolymer polyester core-sheath-type composite fibers used in Example 51 in an amount of 15% by mass, were laminated in the order of thin-fiber sheet-thick-fiber sheet-thin-fiber sheet and unified in the wet state, followed by drying, to obtain a separator having a three-layer laminated structure (thickness: 2.0 mm).

(Comparative Example 5)

C Glass short fibers having an average fiber diameter of 0.6 $\mu$m in an amount of 100% by mass were subjected to wet papermaking, followed by drying, to obtain a separator having a single-layer structure (thickness: 2.0 mm).

(Comparative Examples 6 to 10)

Separators having a single-layer structure (thickness: 2.0 mm) were individually obtained in the same manner as in Comparative Example 5 under the respective conditions shown in Table 4.

Then, with respect to each of the separators obtained above in Examples 1 to 53 and Comparative Examples 1 to 10, a thickness, an average pore diameter, a tensile strength, a water content, a compressive force (flooded separator compressibility), an electrolyte downward movement rate, an average pore diameter, and an electrolyte moving amount were measured in accordance with the following test methods. The results are shown in Tables 1 to 4.

<Thickness>

A thickness was measured in accordance with the method described in the Storage Battery Association Standard SBA S 0406.

<Average pore diameter>

A separator sample having a thickness of 1.5 mm for each of the outer layer and the intermediate layer was satisfactorily impregnated with a liquid for measurement, and an average pore diameter of the sample was measured by means of Capillary Flow Porometer (model: CFP-1200 AEC), manufactured by Porous Material, Inc., using a 32 mmΦ exclusive wire mesh adapter.

<Tensile strength>

A tensile strength was measured in accordance with the method described in the Storage Battery Association Standard SBA S 0406.

<Water content>

A separator is cut into 10 cm x 10 cm to obtain a sample, and a weight ($W_1$) of the sample is measured. The sample is immersed in water for one hour and then removed from the water, and the corner of the resultant sample is held by means of forceps and lifted at an angle of 45°, and, at a point in time when the intervals of water drops falling down from the sample becomes 5 seconds or longer, a weight ($W_2$) of the sample is measured. A water content (%) is determined by making a calculation using the following formula.

$$\texttt{Water content (\%) = } (W_2 - W_1) \div W_2 \times 100$$

<Compressive force>

Separator samples each obtained by cutting a separator into 10 cm x 10 cm are stacked so that the total thickness of the samples becomes about 6 mm and the stacked sample is placed in a polyethylene bag, and then pressed by a horizontal pressing apparatus having a load cell under conditions at a pressure of 40 kg/100 cm$^2$, and the sample is flooded with a sulfuric acid solution having a specific gravity of 1.3 portion by portion in an amount of 5 g every flooding, and a pressure in each flooding is measured. The flooding is continued until the sulfuric acid solution overflows the surface of the separator sample from the inside. Then, the sulfuric acid solution overflowing the surface of the separator sample is drawn from the surface, and the amount of the sulfuric acid solution drawn and a pressure at that time are measured. Then, the sulfuric acid solution retained inside the separator sample is forcibly drawn from the sample using a syringe, and the amount of the sulfuric acid solution drawn and a pressure at that time are measured in each drawing. This operation is continued until the sulfuric acid solution cannot be drawn from the separator sample any more. Using these results of the measurement, a flooding solution amount (an amount of the solution attached to the separator sample) is taken as the abscissa and a pressure is taken as the ordinate to obtain a graph as shown in Fig. 1 of JP-A-5-67463. The general behavior shown in the graph is as follows. After the flooding is started, the pressure gradually decreases, and the pressure does not decrease any more at a certain point in time, and then the pressure gradually increases, and finally the pressure does not increase and change any more. The solution amount (amount of the solution attached to the separator sample) on the abscissa at the first time point when the pressure does not increase and change (corresponding to the point A shown in Fig. 1 of JP-A-5-67463) is taken as a time point at which the degree of sulfuric acid solution saturation of the separator sample is 100%, and, from a curve of the graph for the operation of drawing the sulfuric acid solution from the separator sample (corresponding to the curve from the point A to the point C shown in Fig. 1 of JP-A-5-67463), a pressure (kg/100 cm$^2$) at a time point when the degree of sulfuric acid solution saturation of the separator sample is 65% is read and taken as a compressive force (kg/100 cm$^2$).

<Electrolyte downward movement rate>

A separator sample, which is satisfactorily impregnated with water, is disposed between acryl plates so that the pressure becomes 50 kg/100 cm$^2$, and a colored sulfuric acid solution having a specific gravity of 1.3 is allowed to flow into the sample from the top, and, after 60 minutes, a downward movement distance (mm) of the colored sulfuric acid solution is measured to determine an electrolyte downward movement rate (mm/hr).

<Electrolyte moving amount>

Separator samples A, B, and C having the same thickness and having a size of 10 cm x 10 cm (A: outer layer; B: intermediate layer; C: outer layer) are prepared, and weights ($A_1$, $B_1$, $C_1$) of the samples are measured. Then, the separator sample B is satisfactorily impregnated with water and allowed to stand on a plate inclining at 45° for 5 minutes. A weight ($B_2$) of the resultant separator sample B is measured. Then, the separator sample B is sandwiched between the separator samples A and C, and a pressure of 50 kPa is applied to the samples and the samples are allowed to stand for 60 minutes (so that the water contained in the separator sample B soaks into the separator samples A and C). Weights ($A_3$, $B_3$, $C_3$) of the resultant separator samples A, B, and C are measured.

An amount ($B_5$) of water which the separator sample B can retain under a pressure of 50 kPa is measured in advance. A weight ($B_1$) of the separator sample B having a size of 10 cm x 10 cm is first measured. Then, the separator sample B is satisfactorily impregnated with water, and then a pressure of 50 kPa is applied to the sample B to remove the excess water, and the sample B is allowed to stand for 60 minutes, and a weight ($B_4$) of the resultant sample B is measured. An amount ($B_5$) of water which the separator sample B can retain under a pressure of 50 kPa is determined by making a calculation from ($B_4$ - $B_1$).

Then, electrolyte moving amounts (g/100 cm$^2$/hr) through the separator samples are determined by making a calculation using the following formulae.

(1) Electrolyte moving amount from intermediate layer B to outer layer A: $A_6 = A_3 - A_1 - [(B_2 - B_5) \div 2]$
(2) Electrolyte moving amount from intermediate layer B to outer layer C: $C_6 = C_3 - C_1 - [(B_2 - B_5) \div 2]$
(3) Electrolyte moving amount from intermediate layer B to outer layers A, C: $D = A_6 + C_6$

[Table 1]

| Item | | | Unit | Reference | Com.Ex.1 | Com.Ex.2 | Ex.1 | Ex.2 | Ex.3 | Ex.4 | Ex.5 | Ex.6 | Ex.7 | Ex.8 | Ex.9 | Ex.10 | Ex.11 | Com.Ex.3 | Ex.12 | Ex.13 |
|---|---|---|---|---|---|---|---|---|---|---|---|---|---|---|---|---|---|---|---|---|
| Laminated structure or not | | | - | - | Yes | Yes | Yes | Yes | Yes | Yes | Yes | Yes | Yes | Yes | Yes | Yes | Yes | Yes | Yes | Yes |
| | Laminated structure | | - | - | Three layer ABA | Three layer ABA | Three layer ABA | Three layer ABA | Three layer ABA | Three layer ABA | Three layer ABA | Three layer ABA | Three layer ABA | Three layer ABA | Three layer ABA | Three layer ABA | Three layer ABA | Three layer ABA | Three layer ABA | Three layer ABA |
| Construction of layers | Thin fiber layer (A layer) | Average fiber diameter (a1) | μm | 0.4-1.0 | 0.5 | 0.7 | 0.5 | 0.7 | 0.5 | 0.7 | 0.7 | 0.7 | 0.9 | 0.9 | 0.9 | 0.9 | 0.9 | 0.9 | 0.4 | 0.5 |
| | | Specific surface area | m²/g | - | 3.00 | 2.27 | 3.00 | 2.27 | 3.00 | 2.27 | 2.27 | 2.27 | 1.79 | 1.79 | 1.79 | 1.79 | 1.79 | 1.79 | 3.46 | 3.00 |
| | Thick fiber layer (B layer) | Average fiber diameter (b1) | μm | 1.3-4.0 | 1.2 | 1.2 | 1.3 | 1.3 | 1.5 | 1.5 | 1.5 | 1.5 | 1.5 | 1.5 | 1.5 | 1.5 | 1.5 | 1.5 | 2.5 | 2.5 |
| | | Specific surface area | m²/g | - | 1.32 | 1.32 | 1.21 | 1.21 | 1.05 | 1.05 | 1.05 | 1.05 | 1.05 | 1.05 | 1.05 | 1.05 | 1.05 | 1.05 | 0.64 | 0.64 |
| | All layers | Average fiber diameter (c1)*1 | μm | ≥1.2 | 1.13 | 1.15 | 1.22 | 1.24 | 1.40 | 1.42 | 1.34 | 1.26 | 1.44 | 1.38 | 1.32 | 1.26 | 1.20 | 1.14 | 2.29 | 2.30 |
| Material construction | Thin fiber layer (A layer) | Glass fiber | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| | | Silica fine powder | mass% | - | - | - | - | - | - | - | - | - | - | - | - | - | - | - | - | - |
| | Thick fiber layer (B layer) | Glass fibers | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| Glass fiber material unit cost | Thin fiber layer (A1)*2 | | - | - | 460 | 185 | 460 | 185 | 460 | 185 | 185 | 185 | 110 | 110 | 110 | 110 | 110 | 110 | 750 | 460 |
| | Thick fiber layer (B1)*2 | | - | - | 95 | 95 | 90 | 90 | 85 | 85 | 85 | 85 | 85 | 85 | 85 | 85 | 85 | 85 | 70 | 70 |
| | All layers (C1)*3 | | - | - | 132 | 104 | 127 | 100 | 123 | 95 | 105 | 115 | 88 | 90 | 93 | 95 | 98 | 100 | 138 | 109 |
| | | Improvement index (D1)*4 | - | ≤1.50 (≤1.30) | 1.32 | 1.04 | 1.27 | 1.00 | 1.23 | 0.95 | 1.05 | 1.15 | 0.88 | 0.90 | 0.93 | 0.95 | 0.98 | 1.00 | 1.38 | 1.09 |
| | | (Judgement)*5 | - | - | ○ | ◎ | ◎ | ◎ | ◎ | ◎ | ◎ | ◎ | ◎ | ◎ | ◎ | ◎ | ◎ | ◎ | ○ | ◎ |
| Thickness | A layer only | | mm | - | 0.10 | 0.10 | 0.10 | 0.10 | 0.10 | 0.10 | 0.20 | 0.30 | 0.10 | 0.20 | 0.30 | 0.40 | 0.50 | 0.60 | 0.10 | 0.10 |
| | B layer only | | mm | - | 1.80 | 1.80 | 1.80 | 1.80 | 1.80 | 1.80 | 1.60 | 1.40 | 1.80 | 1.60 | 1.40 | 1.20 | 1.00 | 0.80 | 1.80 | 1.80 |
| | A layer total (a2) | | mm | - | 0.2 | 0.2 | 0.2 | 0.2 | 0.2 | 0.2 | 0.4 | 0.6 | 0.2 | 0.4 | 0.6 | 0.8 | 1.0 | 1.2 | 0.2 | 0.2 |
| | B layer total (b2) | | mm | - | 1.8 | 1.8 | 1.8 | 1.8 | 1.8 | 1.8 | 1.6 | 1.4 | 1.8 | 1.6 | 1.4 | 1.2 | 1.0 | 0.8 | 1.8 | 1.8 |
| | All layers (c2) | | mm | - | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Thickness ratio | A Layer (a3) | % | 10-50 | 10 | 10 | 10 | 10 | 10 | 10 | 20 | 30 | 10 | 20 | 30 | 40 | 50 | 60 | 10 | 10 |
| | | B Layer (b3) | % | 50-90 | 90 | 90 | 90 | 90 | 90 | 90 | 80 | 70 | 90 | 80 | 70 | 60 | 50 | 40 | 90 | 90 |
| Average pore diameter | Thin fiber layer (A2) | | μm | ≤3.5 | 1.58 | 2.40 | 1.58 | 2.40 | 1.58 | 2.40 | 2.40 | 2.40 | 3.23 | 3.23 | 3.23 | 3.23 | 3.23 | 3.23 | 1.17 | 1.58 |
| | Thick fiber layer (B2) | | μm | ≥4.0 | 4.47 | 4.47 | 4.88 | 4.88 | 5.70 | 5.70 | 5.70 | 5.70 | 5.70 | 5.70 | 5.70 | 5.70 | 5.70 | 5.70 | 9.83 | 9.83 |
| | All layers (C2)*6 | | μm | - | 4.18 | 4.26 | 4.55 | 4.63 | 5.29 | 5.37 | 5.04 | 4.71 | 5.46 | 5.21 | 4.96 | 4.71 | 4.47 | 4.22 | 8.96 | 9.00 |
| | Thick fiber layer/thin fiber layer ratio (D2)*7 | | - | ≥1.5 | 2.83 | 1.86 | 3.09 | 2.03 | 3.61 | 2.37 | 2.37 | 2.37 | 1.77 | 1.77 | 1.77 | 1.77 | 1.77 | 1.77 | 8.44 | 6.23 |

[Table 1] (continued)

| Item | | | Unit | Reference | Com. Ex. 1 | Com. Ex. 2 | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Com. Ex. 3 | Ex. 12 | Ex. 13 |
|---|---|---|---|---|---|---|---|---|---|---|---|---|---|---|---|---|---|---|---|---|
| Tensile strength | Thin-fiber layer (A3) | | N/10mm² | - | 5.75 | 5.45 | 5.75 | 5.45 | 5.75 | 5.45 | 5.45 | 5.45 | 5.15 | 5.15 | 5.15 | 5.15 | 5.15 | 5.15 | 5.90 | 5.75 |
| | Thick-fiber layer (B3) | | N/10mm² | - | 4.70 | 4.70 | 4.60 | 4.60 | 4.30 | 4.30 | 4.30 | 4.30 | 4.30 | 4.30 | 4.30 | 4.30 | 4.30 | 4.30 | 3.05 | 3.05 |
| | All layers (C3)*8 | | N/10mm² | - | 4.81 | 4.78 | 4.72 | 4.69 | 4.45 | 4.42 | 4.53 | 4.65 | 4.39 | 4.47 | 4.55 | 4.64 | 4.73 | 4.81 | 3.34 | 3.32 |
| | | Improvement index (D3)*9 | - | - | 0.96 | 0.96 | 0.94 | 0.94 | 0.89 | 0.88 | 0.91 | 0.93 | 0.88 | 0.89 | 0.91 | 0.93 | 0.95 | 0.96 | 0.67 | 0.66 |
| Water content | Thin-fiber layer (A4) | | % | - | 92.2 | 91.1 | 92.2 | 91.1 | 92.2 | 91.1 | 91.1 | 91.1 | 90.2 | 90.2 | 90.2 | 90.2 | 90.2 | 90.2 | 92.7 | 92.2 |
| | Thick-fiber layer (B4) | | % | - | 88.9 | 88.9 | 88.6 | 88.6 | 87.9 | 87.9 | 87.9 | 87.9 | 87.9 | 87.9 | 87.9 | 87.9 | 87.9 | 87.9 | 85.5 | 85.5 |
| | All layers (C4)*10 | | % | - | 89.2 | 89.1 | 89.0 | 88.9 | 88.3 | 88.2 | 88.5 | 88.9 | 88.1 | 88.4 | 88.6 | 88.8 | 89.1 | 89.3 | 86.2 | 86.2 |
| | | Improvement index (D4)*11 | - | ≥0.95 (≥0.97) | 0.99 | 0.99 | 0.99 | 0.99 | 0.98 | 0.98 | 0.99 | 0.99 | 0.98 | 0.98 | 0.99 | 0.99 | 0.99 | 0.99 | 0.96 | 0.96 |
| | | (Judgment)*12 | - | - | ⊙ | ⊙ | ⊙ | ⊙ | ⊙ | ⊙ | ⊙ | ⊙ | ⊙ | ⊙ | ⊙ | ⊙ | ⊙ | ⊙ | ○ | ○ |
| Compressive force | Thin-fiber layer (A5) | | kg/100cm² | - | 7.8 | 8.7 | 7.8 | 8.7 | 7.8 | 8.7 | 8.7 | 8.7 | 9.6 | 9.6 | 9.6 | 9.6 | 9.6 | 9.6 | 7.2 | 7.8 |
| | Thick-fiber layer (B5) | | kg/100cm² | - | 11.0 | 11.0 | 11.4 | 11.4 | 12.1 | 12.1 | 12.1 | 12.1 | 12.1 | 12.1 | 12.1 | 12.1 | 12.1 | 12.1 | 14.5 | 14.5 |
| | All layers (C5)*13 | | kg/100cm² | - | 10.7 | 10.8 | 11.0 | 11.1 | 11.7 | 11.8 | 11.4 | 11.1 | 11.9 | 11.6 | 11.4 | 11.1 | 10.9 | 10.6 | 13.8 | 13.8 |
| | | Improvement index (D5)*14 | - | ≥1.05 (≥1.15) | 1.04 | 1.04 | 1.07 | 1.08 | 1.13 | 1.14 | 1.11 | 1.08 | 1.15 | 1.13 | 1.10 | 1.08 | 1.05 | 1.03 | 1.34 | 1.34 |
| | | (Judgment)*15 | - | - | × | × | ○ | ○ | ○ | ○ | ○ | ○ | ⊙ | ○ | ○ | ○ | ○ | × | ⊙ | ⊙ |
| Stratification prevention | Electrolyte downward movement rate (Thin-fiber layer)(A6) | | mm/hr | - | 26.8 | 67.5 | 26.8 | 67.5 | 26.8 | 67.5 | 67.5 | 67.5 | 108.2 | 108.2 | 108.2 | 108.2 | 108.2 | 108.2 | 6.4 | 26.8 |
| | | Improvement index (D6)*16 | - | ≥1.15 (≥1.50) | 4.80 | 1.90 | 4.80 | 1.90 | 4.80 | 1.90 | 1.90 | 1.90 | 1.19 | 1.19 | 1.19 | 1.19 | 1.19 | 1.19 | 20.00 | 4.80 |
| | | (Judgement)*17 | - | - | ⊙ | ⊙ | ⊙ | ⊙ | ⊙ | ⊙ | ⊙ | ⊙ | ○ | ○ | ○ | ○ | ○ | ○ | ⊙ | ⊙ |
| | Electrolyte retention amount (Thin-fiber layer)(A7)*18 | | g/100cm² | ≥1.70 (≥3.00) | 1.84 | 1.82 | 1.84 | 1.82 | 1.84 | 1.82 | 3.64 | 5.47 | 1.80 | 3.61 | 5.41 | 7.22 | 9.02 | 10.82 | 1.85 | 1.84 |
| | | (Judgment)*19 | - | - | ○ | ○ | ○ | ○ | ○ | ○ | ⊙ | ⊙ | ○ | ⊙ | ⊙ | ⊙ | ⊙ | ⊙ | ○ | ○ |
| | | (Collective judgment)*20 | - | - | ○ | ○ | ○ | ○ | ○ | ○ | ⊙ | ⊙ | ○ | ○ | ○ | ○ | ○ | ○ | ○ | ○ |
| Electrolyte movement | Electrolyte moving amount (C8) | | g/100cm²/hr | - | 5.0 | 3.0 | 5.6 | 3.4 | 6.6 | 4.1 | 4.1 | 4.1 | 2.9 | 2.9 | 2.9 | 2.9 | 2.9 | 2.9 | 16.5 | 12.0 |
| | | Improvement index (D8)*21 | - | ≥2.00 (≥3.00) | 3.92 | 2.37 | 4.34 | 2.64 | 5.17 | 3.19 | 3.19 | 3.19 | 2.22 | 2.22 | 2.22 | 2.22 | 2.22 | 2.22 | 12.86 | 9.34 |
| | | (Judgment)*22 | - | - | ⊙ | ○ | ⊙ | ○ | ⊙ | ⊙ | ⊙ | ⊙ | ○ | ○ | ○ | ○ | ○ | ○ | ⊙ | ⊙ |
| Collective judgment (Glass material unit cost + Water content + Compressive force + Stratification prevention + Electrolyte movement)*23 | | | - | - | × | × | ○ | ○ | ○ | ○ | ○ | ○ | ○ | ○ | ○ | ○ | ○ | × | ○ | ○ |

*1: Value calculated from average fiber diameter (a1) of A layer and average fiber diameter (b1) of B layer: c1=a1*(a3/100)+b1*(b3/100)

*2: Relative value determined when the value in Comparative Example 7 is 100

*3: C1=A1*(a3/100)+B1*(b3/100)

*4: Index indicating the degree of improvement of glass fiber material unit cost relative to the value in Comparative Example 7 as a reference (=1): D1=C1/(C1 in Comparative Example 7)

*5: ⊙: D1 is the second reference (=1.30) or less; ○: D1 is the first reference (=1.50) or less; ×: Other cases.

*6: C2=A2*(a3/100)+B2*(b3/100)

*7: D2=B2/A2

*8: C3=A3*(a3/100)+B3*(b3/100)

*9: Index indicating the degree of improvement of tensile strength relative to the value in Comparative Example 7 as a reference (=1): D3=C3/(C3 in Comparative Example 7)

*10: C4=A4*(a3/100)+B4*(b3/100)

*11: Index indicating the degree of improvement of water content relative to the value in Comparative Example 7 as a reference (=1): D4=C4/(C4 in Comparative Example 7)

*12: ⊙: D4 is the second reference (=0.97) or more; ○: D4 is the first reference (=0.95) or more; ×: Other cases.

*13: C5=A5*(a3/100)+B5*(b3/100)

*14: Index indicating the degree of improvement of compressive force relative to the value in Comparative Example 7 as a reference (=1): D5=C5/(C5 in Comparative Example 7)

*15: ⊙: D5 is the second reference (=1.15) or more; ○: D5 is the first reference (=1.05) or more; ×: Other cases.

*16: Index indicating the degree of improvement of electrolyte downward movement rate relative to the value in Comparative Example 7 as a reference (=1): D6=1/(A6/(A6 in Comparative Example 7))

*17: ⊙: D6 is the second reference (=1.50) or more; ○: D6 is the first reference (=1.15) or more; ×: Other cases.

*18: Electrolyte retention amount (g) per 100 cm² of each sample: A7=(10*10*a2/10)*(A4/100)

*19: ⊙: D7 is the second reference (=3.00) or more; ○: D7 is the first reference (=1.70) or more; ×: Other cases

*20: ⊙: D6 is the second reference (=1.50) or more and A7 is the second reference (=3.00) or more; ○: D6 is the first reference (=1.15) or more and A7 is the first reference (=1.70) or more; ×: Other cases.

*21: Index indicating the degree of improvement of electrolyte moving amount relative to the value in Comparative Example 7 as a reference (=1): D8=C8/(C8 in Comparative Example 7)

*22: ⊙: D8 is the second reference (=3.00) or more; ○: D8 is the first reference (=2.00) or more; ×: Other cases.

*23: ⊙: Judgment for glass fiber material unit cost is ⊙, judgment for water content is ⊙, judgment for compressive force is ⊙, collective judgment for stratification prevention is ⊙, and judgment for electrolyte movement is ⊙; ○: Judgment for glass fiber material unit cost is ⊙ or ○, judgment for water content is ⊙ or ○, judgment for compressive force is ⊙ or ○, collective judgment for stratification prevention is ⊙ or ○, and judgment for electrolyte movement is ⊙ or ○; ×: Other cases.

[Table 2]

| Item | | | Unit | Reference | Ex.14 | Com.Ex.4 | Ex.15 | Ex.16 | Ex.17 | Ex.18 | Ex.19 | Ex.20 | Ex.21 | Ex.22 | Ex.23 | Ex.24 | Ex.25 | Ex.26 | Ex.27 | Ex.28 |
|---|---|---|---|---|---|---|---|---|---|---|---|---|---|---|---|---|---|---|---|---|
| Laminated structure or not | | | - | - | Yes | Yes | Yes | Yes | Yes | Yes | Yes | Yes | Yes | Yes | Yes | Yes | Yes | Yes | Yes | Yes |
| | Laminated structure | | - | - | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A | Three layer A/B/A |
| Construction of layers | Thin-fiber layer (A layer) | Average fiber diameter (a1) | μm | 0.4-1.0 | 0.5 | 0.7 | 0.7 | 0.7 | 0.7 | 0.7 | 0.7 | 0.9 | 0.9 | 0.9 | 0.9 | 0.9 | 0.4 | 0.5 | 0.5 | 0.7 |
| | | Specific surface area | m²/g | - | 3.00 | 2.27 | 2.27 | 2.27 | 2.27 | 2.27 | 2.27 | 1.79 | 1.79 | 1.79 | 1.79 | 1.79 | 3.46 | 3.00 | 3.00 | 2.27 |
| | Thick-fiber layer (B layer) | Average fiber diameter (b1) | μm | 1.3-4.0 | 2.5 | 2.5 | 2.5 | 2.5 | 2.5 | 2.5 | 2.5 | 2.5 | 2.5 | 2.5 | 2.5 | 2.5 | 3.5 | 3.5 | 3.5 | 3.5 |
| | | Specific surface area | m²/g | - | 0.64 | 0.64 | 0.64 | 0.64 | 0.64 | 0.64 | 0.64 | 0.64 | 0.64 | 0.64 | 0.64 | 0.64 | 0.49 | 0.49 | 0.49 | 0.49 |
| | All layers | Average fiber diameter (c1)*1 | μm | ≥1.2 | 2.10 | 2.41 | 2.32 | 2.14 | 1.96 | 1.78 | 1.60 | 2.34 | 2.18 | 2.02 | 1.86 | 1.70 | 3.19 | 3.20 | 2.90 | 3.22 |
| Material construction | Thin-fiber layer (A layer) | Glass fiber | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| | | Silica fine powder | mass% | - | - | - | - | - | - | - | - | - | - | - | - | - | - | - | - | - |
| | Thick-fiber layer (B layer) | Glass fibers | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| Glass fiber material unit cost | Thin-fiber layer (A1)*2 | | - | - | 460 | 185 | 185 | 185 | 185 | 185 | 185 | 110 | 110 | 110 | 110 | 110 | 750 | 460 | 460 | 185 |
| | Thick-fiber layer (B1)*2 | | - | - | 70 | 70 | 70 | 70 | 70 | 70 | 70 | 70 | 70 | 70 | 70 | 70 | 61 | 61 | 61 | 61 |
| | All layers (C1)*3 | | - | - | 148 | 76 | 82 | 93 | 105 | 116 | 128 | 74 | 78 | 82 | 86 | 90 | 130 | 101 | 141 | 73 |
| | | Improvement index (D1)*4 | - | ≤1.50 (≤1.30) | 1.48 | 0.76 | 0.82 | 0.93 | 1.05 | 1.16 | 1.28 | 0.74 | 0.78 | 0.82 | 0.86 | 0.90 | 1.30 | 1.01 | 1.41 | 0.73 |
| | | (Judgement)*5 | - | - | ○ | ⊙ | ⊙ | ⊙ | ⊙ | ⊙ | ⊙ | ⊙ | ⊙ | ⊙ | ⊙ | ⊙ | ⊙ | ⊙ | ○ | ⊙ |
| Thickness | A Layer only | | mm | - | 0.20 | 0.05 | 0.10 | 0.20 | 0.30 | 0.40 | 0.50 | 0.10 | 0.20 | 0.30 | 0.40 | 0.50 | 0.10 | 0.10 | 0.20 | 0.10 |
| | B Layer only | | mm | - | 1.60 | 1.90 | 1.80 | 1.60 | 1.40 | 1.20 | 1.00 | 1.80 | 1.60 | 1.40 | 1.20 | 1.00 | 1.80 | 1.80 | 1.60 | 1.80 |
| | A layer total (a2) | | mm | - | 0.4 | 0.1 | 0.2 | 0.4 | 0.6 | 0.8 | 1.0 | 0.2 | 0.4 | 0.6 | 0.8 | 1.0 | 0.2 | 0.2 | 0.4 | 0.2 |
| | B layer total (b2) | | mm | - | 1.6 | 1.9 | 1.8 | 1.6 | 1.4 | 1.2 | 1.0 | 1.8 | 1.6 | 1.4 | 1.2 | 1.0 | 1.8 | 1.8 | 1.6 | 1.8 |
| | All layers (c2) | | mm | - | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Thickness ratio | A Layer (a3) | % | 10-50 | 20 | 5 | 10 | 20 | 30 | 40 | 50 | 10 | 20 | 30 | 40 | 50 | 10 | 10 | 20 | 10 |
| | | B Layer (b3) | % | 50-90 | 80 | 95 | 90 | 80 | 70 | 60 | 50 | 90 | 80 | 70 | 60 | 50 | 90 | 90 | 80 | 90 |
| Average pore diameter | Thin-fiber layer (A2) | | μm | ≤3.5 | 1.58 | 2.40 | 2.40 | 2.40 | 2.40 | 2.40 | 2.40 | 3.23 | 3.23 | 3.23 | 3.23 | 3.23 | 1.17 | 1.58 | 1.58 | 2.40 |
| | Thick-fiber layer (B2) | | μm | ≥4.0 | 9.83 | 9.83 | 9.83 | 9.83 | 9.83 | 9.83 | 9.83 | 9.83 | 9.83 | 9.83 | 9.83 | 9.83 | 13.95 | 13.95 | 13.95 | 13.95 |
| | All layers (C2)*6 | | μm | - | 8.18 | 9.46 | 9.09 | 8.34 | 7.60 | 6.86 | 6.12 | 9.17 | 8.51 | 7.85 | 7.19 | 6.53 | 12.67 | 12.72 | 11.48 | 12.80 |
| | Thick-fiber layer/thin-fiber layer ratio (D2)*7 | | - | ≥1.5 | 6.23 | 4.09 | 4.09 | 4.09 | 4.09 | 4.09 | 4.09 | 3.04 | 3.04 | 3.04 | 3.04 | 3.04 | 11.98 | 8.84 | 8.84 | 5.81 |

[Table 2] (continued)

| Item | | | Unit | Reference | Ex.14 | Com.Ex.4 | Ex.15 | Ex.16 | Ex.17 | Ex.18 | Ex.19 | Ex.20 | Ex.21 | Ex.22 | Ex.23 | Ex.24 | Ex.25 | Ex.26 | Ex.27 | Ex.28 |
|---|---|---|---|---|---|---|---|---|---|---|---|---|---|---|---|---|---|---|---|---|
| Tensile strength | Thin-fiber layer (A3) | | N/10mm² | - | 5.75 | 5.45 | 5.45 | 5.45 | 5.45 | 5.45 | 5.45 | 5.15 | 5.15 | 5.15 | 5.15 | 5.15 | 5.90 | 5.75 | 5.75 | 5.45 |
| | Thick-fiber layer (B3) | | N/10mm² | - | 3.05 | 3.05 | 3.05 | 3.05 | 3.05 | 3.05 | 3.05 | 3.05 | 3.05 | 3.05 | 3.05 | 3.05 | 2.00 | 2.00 | 2.00 | 2.00 |
| | All layers (C3)*8 | | N/10mm² | - | 3.59 | 3.17 | 3.29 | 3.53 | 3.77 | 4.01 | 4.25 | 3.26 | 3.47 | 3.68 | 3.89 | 4.10 | 2.39 | 2.38 | 2.75 | 2.36 |
| | | Improvement index (D3)*9 | - | - | 0.72 | 0.63 | 0.66 | 0.71 | 0.75 | 0.80 | 0.85 | 0.65 | 0.69 | 0.74 | 0.78 | 0.82 | 0.48 | 0.48 | 0.55 | 0.47 |
| Water content | Thin-fiber layer (A4) | | % | - | 92.2 | 91.1 | 91.1 | 91.1 | 91.1 | 91.1 | 91.1 | 90.2 | 90.2 | 90.2 | 90.2 | 90.2 | 92.7 | 92.2 | 92.2 | 91.1 |
| | Thick-fiber layer (B4) | | % | - | 85.5 | 85.5 | 85.5 | 85.5 | 85.5 | 85.5 | 85.5 | 85.5 | 85.5 | 85.5 | 85.5 | 85.5 | 84.7 | 84.7 | 84.7 | 84.7 |
| | All layers (C4)*10 | | % | - | 86.8 | 85.8 | 86.1 | 86.6 | 87.2 | 87.7 | 88.3 | 86.0 | 86.4 | 86.9 | 87.4 | 87.9 | 85.5 | 85.5 | 86.2 | 85.3 |
| | | Improvement index (D4)*11 | - | >0.95 (≥0.97) | 0.97 | 0.96 | 0.96 | 0.96 | 0.97 | 0.98 | 0.98 | 0.96 | 0.96 | 0.97 | 0.97 | 0.98 | 0.95 | 0.95 | 0.96 | 0.95 |
| | | (Judgment)*12 | - | - | ⊙ | ○ | ○ | ○ | ⊙ | ⊙ | ⊙ | ○ | ○ | ⊙ | ⊙ | ⊙ | ○ | ○ | ○ | ○ |
| Compressive force | Thin-fiber layer (A5) | | kg/100cm² | - | 7.8 | 8.7 | 8.7 | 8.7 | 8.7 | 8.7 | 8.7 | 9.6 | 9.6 | 9.6 | 9.6 | 9.6 | 7.2 | 7.8 | 7.8 | 8.7 |
| | Thick-fiber layer (B5) | | kg/100cm² | - | 14.5 | 14.5 | 14.5 | 14.5 | 14.5 | 14.5 | 14.5 | 14.5 | 14.5 | 14.5 | 14.5 | 14.5 | 15.3 | 15.3 | 15.3 | 15.3 |
| | All layers (C5)*13 | | kg/100cm² | - | 13.2 | 14.2 | 13.9 | 13.3 | 12.8 | 12.2 | 11.6 | 14.0 | 13.5 | 13.0 | 12.5 | 12.1 | 14.5 | 14.6 | 13.8 | 14.6 |
| | | Improvement index (D5)*14 | - | ≥1.05 (≥1.15) | 1.28 | 1.38 | 1.35 | 1.30 | 1.24 | 1.18 | 1.13 | 1.36 | 1.31 | 1.27 | 1.22 | 1.17 | 1.41 | 1.41 | 1.34 | 1.42 |
| | | (Judgment)*15 | - | - | ⊙ | ⊙ | ⊙ | ⊙ | ⊙ | ⊙ | ○ | ⊙ | ⊙ | ⊙ | ⊙ | ⊙ | ⊙ | ⊙ | ⊙ | ⊙ |
| Stratification prevention | Electrolyte downward movement rate (Thin-fiber layer)(A6) | | mm/hr | - | 26.8 | 67.5 | 67.5 | 67.5 | 67.5 | 67.5 | 67.5 | 108.2 | 108.2 | 108.2 | 108.2 | 108.2 | 6.4 | 26.8 | 26.8 | 67.5 |
| | | Improvement index (D6)*16 | - | ≥1.15 (≥1.50) | 4.80 | 1.90 | 1.90 | 1.90 | 1.90 | 1.90 | 1.90 | 1.19 | 1.19 | 1.19 | 1.19 | 1.19 | 20.00 | 4.80 | 4.80 | 1.90 |
| | | (Judgement)*17 | - | - | ⊙ | ⊙ | ⊙ | ⊙ | ⊙ | ⊙ | ⊙ | ○ | ○ | ○ | ○ | ○ | ⊙ | ⊙ | ⊙ | ⊙ |
| | Electrolyte retention amount (Thin-fiber layer)(A7)*18 | | g/100cm³ | ≥1.70 (≥3.00) | 3.69 | 0.91 | 1.82 | 3.64 | 5.47 | 7.29 | 9.11 | 1.80 | 3.61 | 5.41 | 7.22 | 9.02 | 1.85 | 1.84 | 3.69 | 1.82 |
| | | (Judgment)*19 | - | - | ⊙ | × | ○ | ⊙ | ⊙ | ⊙ | ⊙ | ○ | ⊙ | ⊙ | ⊙ | ⊙ | ○ | ○ | ⊙ | ○ |
| | (Collective judgment)*20 | | - | - | ⊙ | × | ○ | ⊙ | ⊙ | ⊙ | ⊙ | ○ | ○ | ○ | ○ | ○ | ○ | ○ | ⊙ | ○ |
| Electrolyte movement | Electrolyte moving amount (C8) | | g/100cm³/hr | - | 12.0 | 7.6 | 7.6 | 7.6 | 7.6 | 7.6 | 7.6 | 5.5 | 5.5 | 5.5 | 5.5 | 5.5 | 23.8 | 17.3 | 17.3 | 11.1 |
| | | Improvement index (D8)*21 | - | ≥2.00 (≥3.00) | 9.34 | 5.93 | 5.93 | 5.93 | 5.93 | 5.93 | 5.93 | 4.26 | 4.26 | 4.26 | 4.26 | 4.26 | 18.50 | 13.51 | 13.51 | 8.67 |
| | | (Judgment)*22 | - | - | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| Collective judgment (Glass material unit cost + Water content + Compressive force + Stratification prevention + Electrolyte movement)*23 | | | - | - | ○ | × | ○ | ○ | ⊙ | ⊙ | ○ | ○ | ○ | ○ | ○ | ○ | ○ | ○ | ○ | ○ |

*1: Value calculated from average fiber diameter (a1) of A layer and average fiber diameter (b1) of B layer: c1=a1*(a3/100)+b1*(b3/100)

*2: Relative value determined when the value in Comparative Example 7 is 100

*3: C1=A1*(a3/100)+B1*(b3/100)

*4: Index indicating the degree of improvement of glass fiber material unit cost relative to the value in Comparative Example 7 as a reference (=1): D1=C1/(C1 in Comparative Example 7)

*5: ⊙: D1 is the second reference (=1.30) or less;○: D1 is the first reference (=1.50) or less; ×: Other cases.

*6: C2=A2*(a3/100)+B2*(b3/100)

*7: D2=B2/A2

*8: C3=A3*(a3/100)+B3*(b3/100)

*9: Index indicating the degree of improvement of tensile strength relative to the value in Comparative Example 7 as a reference (=1): D3=C3/(C3 in Comparative Example 7)

*10: C4=A4*(a3/100)+B4*(b3/100)

*11: Index indicating the degree of improvement of water content relative to the value in Comparative Example 7 as a reference (=1): D4=C4/(C4 in Comparative Example 7)

*12: ⊙: D4 is the second reference (=0.97) or more;○: D4 is the first reference (=0.95) or more; ×: Other cases.

*13: C5=A5*(a3/100)+B5*(b3/100)

*14: Index indicating the degree of improvement of compressive force relative to the value in Comparative Example 7 as a reference (=1): D5=C5/(C5 in Comparative Example 7)

*15: ⊙: D5 is the second reference (=1.15) or more;○: D5 is the first reference (=1.05) or more; ×: Other cases.

*16: Index indicating the degree of improvement of electrolyte downward movement rate relative to the value in Comparative Example 7 as a reference (=1): D6=1/(A6/(A6 in Comparative Example 7))

*17: ⊙: D6 is the second reference (=1.50) or more;○: D6 is the first reference (=1.15) or more; ×: Other cases.

*18: Electrolyte retention amount (g) per 100 cm$^2$ of each sample: A7=(10*10*a2/10)*(A4/100)

*19: ⊙: D7 is the second reference (=3.00) or more;○: D7 is the first reference (=1.70) or more; ×: Other cases

*20: ⊙: D6 is the second reference (=1.50) or more and A7 is the second reference (=3.00) or more; ○: D6 is the first reference (=1.15) or more and A7 is the first reference (=1.70) or more; ×: Other cases.

*21: Index indicating the degree of improvement of electrolyte moving amount relative to the value in Comparative Example 7 as a reference (=1): D8=C8/(C8 in Comparative Example 7)

*22: ⊙: D8 is the second reference (=3.00) or more;○: D8 is the first reference (=2.00) or more; ×: Other cases.

*23: ⊙: Judgment for glass fiber material unit cost is ⊙, judgment for water content is ⊙, judgment for compressive force is ⊙, collective judgment for stratification prevention is ⊙, and judgment for electrolyte movement is ⊙; ○: Judgment for glass fiber material unit cost is ⊙ or ○, judgment for water content is ⊙ or ○, judgment for compressive force is ⊙ or ○, collective judgment for stratification prevention is ⊙ or ○, and judgment for electrolyte movement is ⊙ or ○; ×: Other cases.

[Table 3]

| Item | | | Unit | Reference | Ex.29 | Ex.30 | Ex.31 | Ex.32 | Ex.33 | Ex.34 | Ex.35 | Ex.36 | Ex.37 | Ex.38 | Ex.39 | Ex.40 | Ex.41 | Ex.42 | Ex.43 | Ex.44 |
|---|---|---|---|---|---|---|---|---|---|---|---|---|---|---|---|---|---|---|---|---|
| Laminated structure or not | | | - | - | Yes | Yes | Yes | Yes | Yes | Yes | Yes | Yes | Yes | Yes | Yes | Yes | Yes | Yes | Yes | Yes |
| | | Laminated structure | - | - | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA | Three-layer ABA |
| Construction of layers | Thin-fiber layer (A layer) | Average fiber diameter (a1) | μm | 0.4-1.0 | 0.7 | 0.7 | 0.7 | 0.7 | 0.9 | 0.9 | 0.9 | 0.9 | 0.9 | 0.4 | 0.5 | 0.5 | 0.7 | 0.7 | 0.7 | 0.7 |
| | | Specific surface area | m²/g | - | 2.27 | 2.27 | 2.27 | 2.27 | 1.79 | 1.79 | 1.79 | 1.79 | 1.79 | 3.46 | 3.00 | 3.00 | 2.27 | 2.27 | 2.27 | 2.27 |
| | Thick-fiber layer (B layer) | Average fiber diameter (b1) | μm | 1.3-4.0 | 3.5 | 3.5 | 3.5 | 3.5 | 3.5 | 3.5 | 3.5 | 3.5 | 3.5 | 4.0 | 4.0 | 4.0 | 4.0 | 4.0 | 4.0 | 4.0 |
| | | Specific surface area | m²/g | - | 0.49 | 0.49 | 0.49 | 0.49 | 0.49 | 0.49 | 0.49 | 0.49 | 0.49 | 0.45 | 0.45 | 0.45 | 0.45 | 0.45 | 0.45 | 0.45 |
| | All layers | Average fiber diameter (c1)*1 | μm | ≥1.2 | 2.94 | 2.66 | 2.38 | 2.10 | 3.24 | 2.98 | 2.72 | 2.46 | 2.20 | 3.64 | 3.65 | 3.30 | 3.67 | 3.34 | 3.01 | 2.68 |
| Material construction | Thin-fiber layer (A layer) | Glass fiber | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| | | Silica fine powder | mass% | - | - | - | - | - | - | - | - | - | - | - | - | - | - | - | - | - |
| | Thick-fiber layer (B layer) | Glass fibers | mass% | - | 100 | 100 | 100 | 100 | 100 | 100 | 100 | 100 | 100 | 100 | 100 | 100 | 100 | 100 | 100 | 100 |
| | | Organic fibers | mass% | - | - | - | - | - | - | - | - | - | - | - | - | - | - | - | - | - |
| Glass fiber material unit cost | Thin-fiber layer (A1)*2 | | - | - | 185 | 185 | 185 | 185 | 110 | 110 | 110 | 110 | 110 | 750 | 460 | 460 | 185 | 185 | 185 | 185 |
| | Thick-fiber layer (B1)*2 | | - | - | 61 | 61 | 61 | 61 | 61 | 61 | 61 | 61 | 61 | 58 | 58 | 58 | 58 | 58 | 58 | 58 |
| | All layers (C1)*3 | | - | - | 86 | 98 | 111 | 123 | 86 | 71 | 76 | 81 | 86 | 127 | 98 | 138 | 71 | 83 | 96 | 109 |
| | | Improvement index (D1)*4 | - | ≤1.50 (≤1.30) | 0.86 | 0.98 | 1.11 | 1.23 | 0.66 | 0.71 | 0.76 | 0.81 | 0.86 | 1.27 | 0.98 | 1.38 | 0.71 | 0.83 | 0.96 | 1.09 |
| | | (Judgement)*5 | - | - | ⊙ | ⊙ | ⊙ | ⊙ | ⊙ | ⊙ | ⊙ | ⊙ | ⊙ | ⊙ | ⊙ | ○ | ⊙ | ⊙ | ⊙ | ⊙ |
| Thickness | A Layer only | | mm | - | 0.20 | 0.30 | 0.40 | 0.50 | 0.10 | 0.20 | 0.30 | 0.40 | 0.50 | 0.10 | 0.10 | 0.20 | 0.10 | 0.20 | 0.30 | 0.40 |
| | B Layer only | | mm | - | 1.60 | 1.40 | 1.20 | 1.00 | 1.80 | 1.60 | 1.40 | 1.20 | 1.00 | 1.80 | 1.80 | 1.60 | 1.80 | 1.60 | 1.40 | 1.20 |
| | A layer total (a2) | | mm | - | 0.4 | 0.6 | 0.8 | 1.0 | 0.2 | 0.4 | 0.6 | 0.8 | 1.0 | 0.2 | 0.2 | 0.4 | 0.2 | 0.4 | 0.6 | 0.8 |
| | B Layer total (b2) | | mm | - | 1.6 | 1.4 | 1.2 | 1.0 | 1.8 | 1.6 | 1.4 | 1.2 | 1.0 | 1.8 | 1.8 | 1.6 | 1.8 | 1.6 | 1.4 | 1.2 |
| | All layers (c2) | | mm | - | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Thickness ratio | A Layer (a3) | % | 10-50 | 20 | 30 | 40 | 50 | 10 | 20 | 30 | 40 | 50 | 10 | 10 | 20 | 10 | 20 | 30 | 40 |
| | | B Layer (b3) | % | 50-90 | 80 | 70 | 60 | 50 | 90 | 80 | 70 | 60 | 50 | 90 | 90 | 80 | 90 | 80 | 70 | 60 |
| Average pore diameter | Thin-fiber layer (A2) | | μm | ≤3.5 | 2.40 | 2.40 | 2.40 | 2.40 | 3.23 | 3.23 | 3.23 | 3.23 | 3.23 | 1.17 | 1.58 | 1.58 | 2.40 | 2.40 | 2.40 | 2.40 |
| | Thick-fiber layer (B2) | | μm | ≥4.0 | 13.95 | 13.95 | 13.95 | 13.95 | 13.95 | 13.95 | 13.95 | 13.95 | 13.95 | 16.02 | 16.02 | 16.02 | 16.02 | 16.02 | 16.02 | 16.02 |
| | All layers (C2)*6 | | μm | - | 11.64 | 10.49 | 9.33 | 8.18 | 12.88 | 11.81 | 10.74 | 9.66 | 8.59 | 14.53 | 14.57 | 13.13 | 14.65 | 13.29 | 11.93 | 10.57 |
| | Thick-fiber layer/thin-fiber layer ratio (D2)*7 | | - | ≥1.5 | 5.81 | 5.81 | 5.81 | 5.81 | 4.32 | 4.32 | 4.32 | 4.32 | 4.32 | 13.75 | 10.15 | 10.15 | 6.67 | 6.67 | 6.67 | 6.67 |

[Table 3] (continued)

| Item | | | Unit | Reference | Ex.29 | Ex.30 | Ex.31 | Ex.32 | Ex.33 | Ex.34 | Ex.35 | Ex.36 | Ex.37 | Ex.38 | Ex.39 | Ex.40 | Ex.41 | Ex.42 | Ex.43 | Ex.44 |
|---|---|---|---|---|---|---|---|---|---|---|---|---|---|---|---|---|---|---|---|---|
| Tensile strength | Thin-fiber layer(A3) | | N/10mm² | - | 5.45 | 5.45 | 5.45 | 5.45 | 5.15 | 5.15 | 5.15 | 5.15 | 5.15 | 5.90 | 5.75 | 5.75 | 5.45 | 5.45 | 5.45 | 5.45 |
| | Thick-fiber layer(B3) | | N/10mm² | - | 2.00 | 2.00 | 2.00 | 2.00 | 2.00 | 2.00 | 2.00 | 2.00 | 2.00 | 1.55 | 1.55 | 1.55 | 1.55 | 1.55 | 1.55 | 1.55 |
| | All layers(C3)*8 | | N/10mm² | - | 2.69 | 3.04 | 3.38 | 3.73 | 2.32 | 2.63 | 2.95 | 3.26 | 3.58 | 1.99 | 1.97 | 2.39 | 1.94 | 2.33 | 2.72 | 3.11 |
| | | Improvement index(D3)*9 | - | - | 0.54 | 0.61 | 0.68 | 0.75 | 0.46 | 0.53 | 0.59 | 0.65 | 0.72 | 0.40 | 0.39 | 0.48 | 0.39 | 0.47 | 0.54 | 0.62 |
| Water content | Thin-fiber layer(A4) | | % | - | 91.1 | 91.1 | 91.1 | 91.1 | 90.2 | 90.2 | 90.2 | 90.2 | 90.2 | 92.7 | 92.2 | 92.2 | 91.1 | 91.1 | 91.1 | 91.1 |
| | Thick-fiber layer(B4) | | % | - | 84.7 | 84.7 | 84.7 | 84.7 | 84.7 | 84.7 | 84.7 | 84.7 | 84.7 | 84.4 | 84.4 | 84.4 | 84.4 | 84.4 | 84.4 | 84.4 |
| | All layers(C4)*10 | | % | - | 86.0 | 86.6 | 87.3 | 87.9 | 85.3 | 85.8 | 86.4 | 86.9 | 87.5 | 85.2 | 85.2 | 86.0 | 85.1 | 85.7 | 86.4 | 87.1 |
| | | Improvement index(D4)*11 | - | ≥0.96 (≥0.97) | 0.96 | 0.96 | 0.97 | 0.98 | 0.95 | 0.96 | 0.96 | 0.97 | 0.97 | 0.95 | 0.95 | 0.96 | 0.95 | 0.95 | 0.96 | 0.97 |
| | | (Judgment)*12 | - | - | ○ | ○ | ⊙ | ⊙ | ○ | ○ | ○ | ⊙ | ⊙ | ○ | ○ | ○ | ○ | ○ | ○ | ⊙ |
| Compressive force | Thin-fiber layer(A5) | | kg/100cm² | - | 8.7 | 8.7 | 8.7 | 8.7 | 9.6 | 9.6 | 9.6 | 9.6 | 9.6 | 7.2 | 7.8 | 7.8 | 8.7 | 8.7 | 8.7 | 8.7 |
| | Thick-fiber layer(B5) | | kg/100cm² | - | 15.3 | 15.3 | 15.3 | 15.3 | 15.3 | 15.3 | 15.3 | 15.3 | 15.3 | 15.7 | 15.7 | 15.7 | 15.7 | 15.7 | 15.7 | 15.7 |
| | All layers(C5)*13 | | kg/100cm² | - | 14.0 | 13.3 | 12.7 | 12.0 | 14.7 | 14.2 | 13.6 | 13.0 | 12.5 | 14.9 | 14.9 | 14.1 | 15.0 | 14.3 | 13.6 | 12.9 |
| | | Improvement index(D5)*14 | - | ≥1.05 (≥1.15) | 1.36 | 1.29 | 1.23 | 1.17 | 1.43 | 1.37 | 1.32 | 1.26 | 1.21 | 1.44 | 1.45 | 1.37 | 1.46 | 1.39 | 1.32 | 1.25 |
| | | (Judgment)*15 | - | - | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| Stratification prevention | Electrolyte downward movement rate (Thin-fiber layer)(A6) | | mm/hr | - | 67.5 | 67.5 | 67.5 | 67.5 | 108.2 | 108.2 | 108.2 | 108.2 | 108.2 | 6.4 | 26.8 | 26.8 | 67.5 | 67.5 | 67.5 | 67.5 |
| | | Improvement index(D6)*16 | - | ≥1.15 (≥1.50) | 1.90 | 1.90 | 1.90 | 1.90 | 1.19 | 1.19 | 1.19 | 1.19 | 1.19 | 20.00 | 4.80 | 4.80 | 1.90 | 1.90 | 1.90 | 1.90 |
| | | (Judgement)*17 | - | - | ⊙ | ⊙ | ⊙ | ⊙ | ○ | ○ | ○ | ○ | ○ | ⊙ | ⊙ | ⊙ | ⊙ | ⊙ | ⊙ | ⊙ |
| | Electrolyte retention amount (Thin-fiber layer)(A7)*18 | | g/100cm² | ≥1.70 (≥3.00) | 3.64 | 5.47 | 7.29 | 9.11 | 1.80 | 3.61 | 5.41 | 7.22 | 9.02 | 1.85 | 1.84 | 3.69 | 1.82 | 3.64 | 5.47 | 7.29 |
| | | (Judgment)*19 | - | - | ⊙ | ⊙ | ⊙ | ⊙ | ○ | ⊙ | ⊙ | ⊙ | ⊙ | ○ | ○ | ⊙ | ○ | ⊙ | ⊙ | ⊙ |
| | | (Collective judgment)*20 | - | - | ⊙ | ⊙ | ⊙ | ⊙ | ○ | ○ | ○ | ○ | ○ | ○ | ○ | ⊙ | ○ | ⊙ | ⊙ | ⊙ |
| Electrolyte movement | Electrolyte moving amount(C8) | | g/100cm²/hr | - | 11.1 | 11.1 | 11.1 | 11.1 | 8.1 | 8.1 | 8.1 | 8.1 | 8.1 | 27.4 | 20.0 | 20.0 | 12.9 | 12.9 | 12.9 | 12.9 |
| | | Improvement index(D8)*21 | - | ≥2.00 (≥3.00) | 8.67 | 8.67 | 8.67 | 8.67 | 6.30 | 6.30 | 6.30 | 6.30 | 6.30 | 21.33 | 15.59 | 15.59 | 10.03 | 10.03 | 10.03 | 10.03 |
| | | (Judgment)*22 | - | - | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| Collective judgment (Glass material unit cost + Water content + Compressive force + Stratification prevention + Electrolyte movement)*23 | | | - | - | ○ | ○ | ⊙ | ⊙ | ○ | ○ | ○ | ○ | ○ | ○ | ○ | ○ | ○ | ○ | ○ | ⊙ |

*1: Value calculated from average fiber diameter (a1) of A layer and average fiber diameter (b1) of B layer: c1=a1*(a3/100)+b1*(b3/100)

*2: Relative value determined when the value in Comparative Example 7 is 100

*3: C1=A1*(a3/100)+B1*(b3/100)

*4: Index indicating the degree of improvement of glass fiber material unit cost relative to the value in Comparative Example 7 as a reference (=1): D1=C1/(C1 in Comparative Example 7)

*5: ⊙: D1 is the second reference (=1.30) or less; ○: D1 is the first reference (=1.50) or less; ×: Other cases.

*6: C2=A2*(a3/100)+B2*(b3/100)

*7: D2=B2/A2

*8: C3=A3*(a3/100)+B3*(b3/100)

*9: Index indicating the degree of improvement of tensile strength relative to the value in Comparative Example 7 as a reference (=1): D3=C3/(C3 in Comparative Example 7)

*10: C4=A4*(a3/100)+B4*(b3/100)

*11: Index indicating the degree of improvement of water content relative to the value in Comparative Example 7 as a reference (=1): D4=C4/(C4 in Comparative Example 7)

*12: ⊙: D4 is the second reference (=0.97) or more; ○: D4 is the first reference (=0.95) or more; ×: Other cases.

*13: C5=A5*(a3/100)+B5*(b3/100)

*14: Index indicating the degree of improvement of compressive force relative to the value in Comparative Example 7 as a reference (=1): D5=C5/(C5 in Comparative Example 7)

*15: ⊙: D5 is the second reference (=1.15) or more; ○: D5 is the first reference (=1.05) or more; ×: Other cases.

*16: Index indicating the degree of improvement of electrolyte downward movement rate relative to the value in Comparative Example 7 as a reference (=1): D6=1/(A6/(A6 in Comparative Example 7))

*17: ⊙: D6 is the second reference (=1.50) or more; ○: D6 is the first reference (=1.15) or more; ×: Other cases.

*18: Electrolyte retention amount (g) per 100 cm² of each sample: A7=(10*10*a2/10)*(A4/100)

*19: ⊙: D7 is the second reference (=3.00) or more; ○: D7 is the first reference (=1.70) or more; ×: Other cases

*20: ⊙: D6 is the second reference (=1.50) or more and A7 is the second reference (=3.00) or more; ○: D6 is the first reference (=1.15) or more and A7 is the first reference (=1.70) or more; ×: Other cases.

*21: Index indicating the degree of improvement of electrolyte moving amount relative to the value in Comparative Example 7 as a reference (=1): D8=C8/(C8 in Comparative Example 7)

*22: ⊙: D8 is the second reference (=3.00) or more; ○: D8 is the first reference (=2.00) or more; ×: Other cases.

*23: ⊙: Judgment for glass fiber material unit cost is ⊙, judgment for water content is ⊙, judgment for compressive force is ⊙, collective judgment for stratification prevention is ⊙, and judgment for electrolyte movement is ⊙; ○: Judgment for glass fiber material unit cost is ⊙ or ○, judgment for water content is ⊙ or ○, judgment for compressive force is ⊙ or ○, collective judgment for stratification prevention is ⊙ or ○, and judgment for electrolyte movement is ⊙ or ○; ×: Other cases.

[Table 4]

| Item | | | Unit | Reference | Ex.45 | Ex.46 | Ex.47 | Ex.48 | Ex.49 | Ex.50 | Ex.51 | Ex.52 | Ex.53 | Com.Ex.5 | Com.Ex.6 | Com.Ex.7 | Com.Ex.8 | Com.Ex.9 | Com.Ex.10 |
|---|---|---|---|---|---|---|---|---|---|---|---|---|---|---|---|---|---|---|---|
| Laminated structure or not | | | - | - | Yes | Yes | Yes | Yes | Yes | Yes | Yes | Yes | Yes | No | No | No | No | No | No |
| | | Laminated structure | - | - | Three layer ABA | Three layer ABA | Three layer ABA | Three layer ABA | Three layer ABA | Three layer ABA | Three layer ABA | Three layer ABA | Three layer ABA | - | - | - | - | - | - |
| Construction of layers | Thin-fiber layer (A layer) | Average fiber diameter (a1) | μm | 0.4-1.0 | 0.7 | 0.9 | 0.9 | 0.9 | 0.9 | 0.9 | 0.8 | 0.9 | 1.0 | 0.6 | 0.8 | 1.0 | 1.5 | 2.0 | 3.0 |
| | | Specific surface area | m²/g | | 2.27 | 1.79 | 1.79 | 1.79 | 1.79 | 1.79 | 2.04 | 1.79 | 1.97 | 2.62 | 2.04 | 1.57 | 1.05 | 0.79 | 0.53 |
| | Thick-fiber layer (B layer) | Average fiber diameter (b1) | μm | 1.3-4.0 | 4.0 | 4.0 | 4.0 | 4.0 | 4.0 | 4.0 | 1.5 | 1.8 | 1.8 | 0.6 | 0.8 | 1.0 | 1.5 | 2.0 | 3.0 |
| | | Specific surface area | m²/g | | 0.45 | 0.45 | 0.45 | 0.45 | 0.45 | 0.45 | 1.05 | 0.87 | 0.87 | 2.62 | 2.04 | 1.57 | 1.05 | 0.79 | 0.53 |
| | All layers | Average fiber diameter (c1)*1 | μm | ≥1.2 | 2.35 | 3.69 | 3.38 | 3.07 | 2.76 | 2.45 | 1.36 | 1.62 | 1.64 | 0.60 | 0.80 | 1.00 | 1.50 | 2.00 | 3.00 |
| Material construction | Thin-fiber layer (A layer) | Glass fiber | mass% | - | 100 | 100 | 100 | 100 | 100 | 100 | 85 | 75 | 65 | 100 | 100 | 100 | 100 | 100 | 100 |
| | | Organic fibers | mass% | - | - | - | - | - | - | - | 15 | 25 | 15 | - | - | - | - | - | - |
| | | Silica fine powder | mass% | - | - | - | - | - | - | - | - | - | 20 | - | - | - | - | - | - |
| | Thick-fiber layer (B layer) | Glass fibers | mass% | - | 100 | 100 | 100 | 100 | 100 | 100 | 100 | 85 | 85 | 100 | 100 | 100 | 100 | 100 | 100 |
| | | Organic fibers | mass% | - | - | - | - | - | - | - | - | 15 | 15 | - | - | - | - | - | - |
| Glass fiber material unit cost | Thin-fiber layer (A1)*2 | | - | - | 185 | 110 | 110 | 110 | 110 | 110 | - | - | - | 300 | 135 | 100 | 85 | 77 | 65 |
| | Thick-fiber layer (B1)*2 | | - | - | 58 | 58 | 58 | 58 | 58 | 58 | - | - | - | 300 | 135 | 100 | 85 | 77 | 65 |
| | All layers (C1)*3 | | - | - | 122 | 63 | 68 | 74 | 79 | 84 | - | - | - | 300 | 135 | 100 | 85 | 77 | 65 |
| | | Improvement index (D1)*4 | - | ≤1.50 (≤1.30) | 1.22 | 0.63 | 0.68 | 0.74 | 0.79 | 0.84 | - | - | - | 3.00 | 1.35 | 1.00 | 0.85 | 0.77 | 0.65 |
| | | (Judgement)*5 | - | - | ⊙ | ⊙ | ⊙ | ⊙ | ⊙ | ⊙ | - | - | - | × | ○ | ⊙ | ⊙ | ⊙ | ⊙ |
| Thickness | A Layer only | | mm | - | 0.50 | 0.10 | 0.20 | 0.30 | 0.40 | 0.50 | 0.20 | 0.20 | 0.20 | - | - | - | - | - | - |
| | B Layer only | | mm | - | 1.00 | 1.80 | 1.60 | 1.40 | 1.20 | 1.00 | 1.60 | 1.60 | 1.60 | - | - | - | - | - | - |
| | A layer total (a2) | | mm | - | 1.0 | 0.2 | 0.4 | 0.6 | 0.8 | 1.0 | 0.4 | 0.4 | 0.4 | 1.0 | 1.0 | 1.0 | 1.0 | 1.0 | 1.0 |
| | B Layer total (b2) | | mm | - | 1.0 | 1.8 | 1.6 | 1.4 | 1.2 | 1.0 | 1.6 | 1.6 | 1.6 | 1.0 | 1.0 | 1.0 | 1.0 | 1.0 | 1.0 |
| | All layers (c2) | | mm | - | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Thickness ratio | A Layer (a3) | % | 10-50 | 50 | 10 | 20 | 30 | 40 | 50 | 20 | 20 | 20 | 50 | 50 | 50 | 50 | 50 | 50 |
| | | B Layer (b3) | % | 50-90 | 50 | 90 | 80 | 70 | 60 | 50 | 80 | 80 | 80 | 50 | 50 | 50 | 50 | 50 | 50 |
| Average pore diameter | Thin-fiber layer (A2) | | μm | ≤3.5 | 2.40 | 3.23 | 3.23 | 3.23 | 3.23 | 3.23 | 2.90 | 3.10 | 3.30 | 1.99 | 2.82 | 3.64 | 5.70 | 7.77 | 11.89 |
| | Thick-fiber layer (B2) | | μm | ≥4.0 | 16.02 | 16.02 | 16.02 | 16.02 | 16.02 | 16.02 | 5.70 | 6.90 | 6.90 | 1.99 | 2.82 | 3.64 | 5.70 | 7.77 | 11.89 |
| | All layers (C2)*6 | | μm | - | 9.21 | 14.74 | 13.46 | 12.18 | 10.90 | 9.62 | 5.14 | 6.14 | 6.18 | 1.99 | 2.82 | 3.64 | 5.70 | 7.77 | 11.89 |
| | Thick-fiber layer/thin-fiber layer ratio (D2)*7 | | - | ≥1.5 | 6.67 | 4.96 | 4.96 | 4.96 | 4.96 | 4.96 | 1.97 | 2.23 | 2.09 | 1.00 | 1.00 | 1.00 | 1.00 | 1.00 | 1.00 |

[Table 4] (continued)

| Item | | | Unit | Reference | Ex.45 | Ex.46 | Ex.47 | Ex.48 | Ex.49 | Ex.50 | Ex.51 | Ex.52 | Ex.53 | Com.Ex.5 | Com.Ex.6 | Com.Ex.7 | Com.Ex.8 | Com.Ex.9 | Com.Ex.10 |
|---|---|---|---|---|---|---|---|---|---|---|---|---|---|---|---|---|---|---|---|
| Tensile strength | Thin-fiber layer (A3) | | N/10mm² | - | 5.45 | 5.15 | 5.15 | 5.15 | 5.15 | 5.15 | 7.60 | 8.40 | 18.00 | 5.60 | 5.30 | 5.00 | 4.30 | 3.65 | 2.50 |
| | Thick-fiber layer (B3) | | N/10mm² | - | 1.55 | 1.55 | 1.55 | 1.55 | 1.55 | 1.55 | 4.20 | 6.50 | 6.50 | 5.60 | 5.30 | 5.00 | 4.30 | 3.65 | 2.50 |
| | All layers (C3)*8 | | N/10mm² | - | 3.50 | 1.91 | 2.27 | 2.63 | 2.99 | 3.35 | 4.88 | 6.88 | 8.80 | 5.60 | 5.30 | 5.00 | 4.30 | 3.65 | 2.50 |
| | | Improvement index (D3)*9 | - | - | 0.70 | 0.38 | 0.45 | 0.53 | 0.60 | 0.67 | 0.98 | 1.38 | 1.76 | 1.12 | 1.06 | 1.00 | 0.86 | 0.73 | 0.50 |
| Water content | Thin-fiber layer (A4) | | % | - | 91.1 | 90.2 | 90.2 | 90.2 | 90.2 | 90.2 | 90.7 | 90.2 | 89.9 | 91.6 | 90.7 | 89.8 | 87.9 | 86.5 | 85.0 |
| | Thick-fiber layer (B4) | | % | - | 84.4 | 84.4 | 84.4 | 84.4 | 84.4 | 84.4 | 87.9 | 87.0 | 87.0 | 91.6 | 90.7 | 89.8 | 87.9 | 86.5 | 85.0 |
| | All layers (C4)*10 | | % | - | 87.8 | 85.0 | 85.6 | 86.1 | 86.7 | 87.3 | 88.5 | 87.6 | 87.6 | 91.6 | 90.7 | 89.8 | 87.9 | 86.5 | 85.0 |
| | | Improvement index (D4)*11 | - | ≥0.95 (≥0.97) | 0.98 | 0.95 | 0.95 | 0.96 | 0.97 | 0.97 | 0.99 | 0.98 | 0.98 | 1.02 | 1.01 | 1.00 | 0.98 | 0.96 | 0.95 |
| | | (Judgment)*12 | - | - | ⊙ | ○ | ○ | ○ | ⊙ | ⊙ | ⊙ | ⊙ | ⊙ | ⊙ | ⊙ | ⊙ | ⊙ | ○ | ○ |
| Compressive force | Thin-fiber layer (A5) | | kg/100cm² | - | 8.7 | 9.6 | 9.6 | 9.6 | 9.6 | 9.6 | 11.5 | 11.5 | 18.0 | 8.2 | 9.2 | 10.3 | 12.2 | 13.5 | 15.0 |
| | Thick-fiber layer (B5) | | kg/100cm² | - | 15.7 | 15.7 | 15.7 | 15.7 | 15.7 | 15.7 | 12.2 | 13.5 | 13.5 | 8.2 | 9.2 | 10.3 | 12.2 | 13.5 | 15.0 |
| | All layers (C5)*13 | | kg/100cm² | - | 12.2 | 15.1 | 14.5 | 13.9 | 13.3 | 12.7 | 12.1 | 13.1 | 14.4 | 8.2 | 9.2 | 10.3 | 12.2 | 13.5 | 15.0 |
| | | Improvement index (D5)*14 | - | ≥1.05 (≥1.15) | 1.18 | 1.47 | 1.41 | 1.35 | 1.29 | 1.23 | 1.17 | 1.27 | 1.40 | 0.80 | 0.89 | 1.00 | 1.18 | 1.31 | 1.46 |
| | | (Judgment)*15 | - | - | ⊙ | ⊙ | ⊙ | ⊙ | ⊙ | ⊙ | ⊙ | ⊙ | ⊙ | × | × | × | ⊙ | ⊙ | ⊙ |
| Stratification prevention | Electrolyte downward movement rate (Thin-fiber layer) (A6) | | mm/hr | - | 67.5 | 108.2 | 108.2 | 108.2 | 108.2 | 108.2 | 91.0 | 104.0 | 105.0 | 47.1 | 87.9 | 128.6 | 230.4 | 332.1 | 535.7 |
| | | Improvement index (D6)*16 | - | ≥1.15 (≥1.50) | 1.90 | 1.19 | 1.19 | 1.19 | 1.19 | 1.19 | 1.41 | 1.24 | 1.22 | 2.73 | 1.46 | 1.00 | 0.56 | 0.39 | 0.24 |
| | | (Judgement)*17 | - | - | ⊙ | ○ | ○ | ○ | ○ | ○ | ○ | ○ | ○ | ⊙ | ○ | × | × | × | × |
| | Electrolyte retention amount (Thin-fiber layer) (A7)*18 | | g/100cm² | ≥1.70 (≥3.00) | 9.11 | 1.80 | 3.61 | 5.41 | 7.22 | 9.02 | 3.63 | 3.61 | 3.60 | 9.16 | 9.07 | 8.98 | 8.79 | 8.65 | 8.50 |
| | | (Judgment)*19 | - | - | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| | (Collective judgment)*20 | | - | - | ⊙ | ○ | ○ | ○ | ○ | ○ | ○ | ○ | ○ | ⊙ | ○ | × | × | × | × |
| Electrolyte movement | Electrolyte moving amount (C8) | | g/100cm²/hr | - | 12.9 | 9.4 | 9.4 | 9.4 | 9.4 | 9.4 | 3.3 | 3.8 | 3.5 | 1.3 | 1.3 | 1.3 | 1.3 | 1.3 | 1.3 |
| | | Improvement index (D8)*21 | - | ≥2.00 (≥3.00) | 10.03 | 7.32 | 7.32 | 7.32 | 7.32 | 7.32 | 2.54 | 2.95 | 2.74 | 1.00 | 1.00 | 1.00 | 1.00 | 1.00 | 1.00 |
| | | (Judgment)*22 | - | - | ⊙ | ⊙ | ⊙ | ⊙ | ⊙ | ⊙ | ⊙ | ⊙ | ⊙ | × | × | × | × | × | × |
| Collective judgment (Glass material unit cost + Water content + Compressive force + Stratification prevention + Electrolyte movement)*23 | | | - | - | ⊙ | ○ | ○ | ○ | ○ | ○ | ○ | ○ | ○ | × | × | × | × | × | × |

*1: Value calculated from average fiber diameter (a1) of A layer and average fiber diameter (b1) of B layer: c1=a1*(a3/100)+b1*(b3/100)

*2: Relative value determined when the value in Comparative Example 7 is 100

*3: C1=A1*(a3/100)+B1*(b3/100)

*4: Index indicating the degree of improvement of glass fiber material unit cost relative to the value in Comparative Example 7 as a reference (=1): D1=C1/(C1 in Comparative Example 7)

*5: ⊙: D1 is the second reference (=1.30) or less; ○: D1 is the first reference (=1.50) or less; ×: Other cases.

*6: C2=A2*(a3/100)+B2*(b3/100)

*7: D2=B2/A2

*8: C3=A3*(a3/100)+B3*(b3/100)

*9: Index indicating the degree of improvement of tensile strength relative to the value in Comparative Example 7 as a reference (=1): D3=C3/(C3 in Comparative Example 7)

*10: C4=A4*(a3/100)+B4*(b3/100)

*11: Index indicating the degree of improvement of water content relative to the value in Comparative Example 7 as a reference (=1): D4=C4/(C4 in Comparative Example 7)

*12: ⊙: D4 is the second reference (=0.97) or more; ○: D4 is the first reference (=0.95) or more; ×: Other cases.

*13: C5=A5*(a3/100)+B5*(b3/100)

*14: Index indicating the degree of improvement of compressive force relative to the value in Comparative Example 7 as a reference (=1): D5=C5/(C5 in Comparative Example 7)

*15: ⊙: D5 is the second reference (=1.15) or more; ○: D5 is the first reference (=1.05) or more; ×: Other cases.

*16: Index indicating the degree of improvement of electrolyte downward movement rate relative to the value in Comparative Example 7 as a reference (=1): D6=1/(A6/(A6 in Comparative Example 7))

*17: ⊙: D6 is the second reference (=1.50) or more; ○: D6 is the first reference (=1.15) or more; ×: Other cases.

*18: Electrolyte retention amount (g) per 100 cm$^2$ of each sample: A7=(10*10*a2/10)*(A4/100)

*19: ⊙: D7 is the second reference (=3.00) or more; ○: D7 is the first reference (=1.70) or more; ×: Other cases

*20: ⊙: D6 is the second reference (=1.50) or more and A7 is the second reference (=3.00) or more; ○: D6 is the first reference (=1.15) or more and A7 is the first reference (=1.70) or more; ×: Other cases.

*21: Index indicating the degree of improvement of electrolyte moving amount relative to the value in Comparative Example 7 as a reference (=1): D8=C8/(C8 in Comparative Example 7)

*22: ⊙: D8 is the second reference (=3.00) or more; ○: D8 is the first reference (=2.00) or more; ×: Other cases.

*23: ⊙: Judgment for glass fiber material unit cost is ⊙, judgment for water content is ⊙, judgment for compressive force is ⊙, collective judgment for stratification prevention is ⊙, and judgment for electrolyte movement is ⊙; ○: Judgment for glass fiber material unit cost is ⊙ or ○, judgment for water content is ⊙ or ○, judgment for compressive force is ⊙ or ○, collective judgment for stratification prevention is ⊙ or ○, and judgment for electrolyte movement is ⊙ or ○; ×: Other cases.

## Claims

1. A separator for a valve regulated lead-acid battery, comprising a paper sheet made by a wet papermaking process, mainly made of glass microfibers, **characterized in that** the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 $\mu$m as the glass microfibers and has an average pore diameter of 3.5 $\mu$m or less, and the thick-fiber layer is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50.

2. The separator for the valve regulated lead-acid battery according to claim 1, wherein the thicknesses of the two thin-fiber layers are substantially the same.

3. The separator for the valve regulated lead-acid battery according to claim 1, wherein the average pore diameters of the two thin-fiber layers are substantially the same.

4. The separator for the valve regulated lead-acid battery according to claim 1, wherein the separator is made substantially only of the glass microfibers, wherein the glass microfibers constituting the thin-fiber layers have an average fiber diameter of 0.4 to 0.9 $\mu$m.

5. The separator for the valve regulated lead-acid battery according to claim 1, wherein the thickness ratio of the thin-fiber layers to the thick-fiber layer in the all layers of the separator is 10/90 or more and less than 25/75.

6. The separator for the valve regulated lead-acid battery according to claim 1, wherein the thin-fiber layer comprises 50% by mass or more of the glass microfibers, 0 to 30% by mass of organic fibers having acid resistance and thermal adhesiveness, and 0 to 30% by mass of an inorganic fine powder.

7. The separator for the valve regulated lead-acid battery according to claim 1, wherein the thick-fiber layer comprises 70% by mass or more of the glass microfibers and 0 to 30% by mass of organic fibers having acid resistance and thermal adhesiveness.

8. The separator for the valve regulated lead-acid battery according to claim 1, wherein the thin-fiber layers and the thick-fiber layer are formed into a three-layer laminated structure in a wet state in a wet papermaking process for obtaining the paper sheet.

9. A valve regulated lead-acid battery comprising the separator according to claim 1.

10. A valve regulated lead-acid battery with a separator arranged between electrode plates, the separator comprising a paper sheet made by a wet papermaking process, mainly made of glass microfibers, wherein the separator is a structure having a three-layer laminated structure which comprises two thin-fiber layers and one thick-fiber layer, wherein the two thin-fiber layers cover both surfaces of the thick-fiber layer in the thicknesswise direction of the separator to constitute the three-layer laminated structure, wherein each of the thin-fiber layers is made of glass fibers having an average fiber diameter of 0.4 to 1.0 $\mu$m as the glass microfibers and has an average pore diameter of 3.5 $\mu$m or less, and the thick-fiber layer is made of glass fibers having an average fiber diameter of 1.3 to 4.0 $\mu$m as the glass microfibers and has an average pore diameter which is 4.0 $\mu$m or more and which is 1.5 times or more that of the thin-fiber layer, wherein the average fiber diameter of the glass fibers in the all layers of the separator is 1.2 $\mu$m or more, and the thickness ratio of the thin-fiber layers to the thick-fiber layer in the all layers of the separator is 10/90 to 50/50, wherein a layer of the separator in contact with the electrode plate surface is only the thin-fiber layer.

11. The valve regulated lead-acid battery according to claim 10, wherein the thickness ratio of the thin-fiber layers to the thick-fiber layer in the all layers of the separator is 10/90 or more and less than 25/75.

<div align="center">

**INTERNATIONAL SEARCH REPORT**

</div>

| | International application No. |
|---|---|
| | PCT/JP2011/002473 |

**A. CLASSIFICATION OF SUBJECT MATTER**
*H01M2/16*(2006.01)i

According to International Patent Classification (IPC) or to both national classification and IPC

**B. FIELDS SEARCHED**

Minimum documentation searched (classification system followed by classification symbols)
H01M2/16

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 56-138862 A (Yuasa Battery Co., Ltd.), 29 October 1981 (29.10.1981), claims; example 3 (Family: none) | 1-11 |
| A | JP 56-167266 A (Japan Storage Battery Co., Ltd.), 22 December 1981 (22.12.1981), entire text (Family: none) | 1-11 |
| A | JP 59-023457 A (Matsushita Electric Industrial Co., Ltd.), 06 February 1984 (06.02.1984), entire text (Family: none) | 1-11 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 July, 2011 (21.07.11) | 02 August, 2011 (02.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/002473

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-174962 A  (Matsushita Electric Industrial Co., Ltd.), 23 June 1992 (23.06.1992), entire text (Family: none) | 1-11 |
| A | JP 55-024330 A  (Yuasa Battery Co., Ltd.), 21 February 1980 (21.02.1980), entire text (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5067463 A